# EUROPÄISCHE PATENTSCHRIFT

(11) **EP 2 427 277 B1**
(45) Veröffentlichungstag und Bekanntmachung des Hinweises auf die Patenterteilung: **26.10.2016**
(21) Anmeldenummer: 10719271.8
(22) Anmeldetag: 05.05.2010
(51) Int. Cl.: B05C 5/02, F16B 35/00

(54) **BESCHICHTUNGSANLAGENBAUTEIL MIT ZUMINDEST EINEM HALTETEIL**
COATING SYSTEM COMPONENT COMPRISING AT LEAST ONE HOLDING PART
COMPOSANT DE DISPOSITIF DE REVÊTEMENT COMPORTANT AU MOINS UN ÉLÉMENT DE MAINTIEN

(30) Priorität: 06.05.2009 DE 102009020077; 30.03.2010 DE 102010013414; 24.07.2009 DE 102009034645
(43) Veröffentlichungstag der Anmeldung: 14.03.2012
(73) Patentinhaber: Dürr Systems AG, 74321 Bietigheim-Bissingen (DE)
(72) Erfinder: HERRE, Frank, 71739 Oberriexingen (DE); HERING, Joachim, 88525 Dürmentingen (DE); MELCHER, Rainer, 71720 Oberstenfeld (DE); BUCK, Thomas, 74343 Sachsenheim (DE); BAUMANN, Michael, 74223 Flein (DE); SEIZ, Bernhard, 74348 Lauffen (DE); MICHELFELDER, Manfred, 71711 Höpfigheim/Steinheim (DE); BEYL, Timo, 74354 Besigheim (DE)
(74) Vertreter: Kotitschke, Bernd
(86) Internationale Anmeldenummer: PCT/EP2010/002764
(87) Internationale Veröffentlichungsnummer: WO 2010/127850

(56) Entgegenhaltungen:
- EP-A1- 0 191 501
- EP-A2- 0 273 016
- EP-A2- 1 157 747
- EP-A2- 1 674 161
- WO-A1-2008/120828
- FR-A1- 2 863 681
- US-A- 4 171 012
- US-A- 4 810 149
- US-A- 4 988 127

## Beschreibung

Die Erfindung betrifft ein Beschichtungsanlagenbauteil, das ein Halteteil aufweist, und ein anderes Beschichtungsanlagenbauteil, das eine Halteeinrichtung aufweist, wobei das Halteteil und die Halteeinrichtung lösbar aneinander befestigt werden können.

In modernen Beschichtungsanlagen, insbesondere Lackieranlagen, beispielsweise zur Beschichtung von Kraftfahrzeugkarosseriebauteilen werden üblicherweise Beschichtungsmitteleinrichtungen (z.B. Nadelventile, Glockenteller, Zerstäuber, etc.) mit herkömmlichen, genormten Gewinden verwendet, um aneinander befestigt werden zu können. Obwohl herkömmliche, genormte Gewinde für eine Vielzahl von Einsatzzwecken gut geeignet sind, weisen sie bei der Verwendung in Beschichtungs-/Lackieranlagen eine Vielzahl von Nachteilen auf, die vor allem aus den besonderen Randbedingungen in Beschichtungs-/Lackieranlagen resultieren.

So können beispielsweise Schlauchplatzer oder Overspray in Beschichtungsanlagen dazu führen, dass Beschichtungsmittel (z.B. Lack, Ein-Komponenten-Lack, Zwei- oder Mehr-Komponenten-Lack, etc.) oder andere in Beschichtungsanlagen gebräuchliche Mittel (z.B. Reinigungsmittel, Spülmittel, Lösemittel, etc.) die Gewinde der Beschichtungsmitteleinrichtungen kontaminieren und beeinträchtigen, insbesondere zu einem unbeabsichtigten Festsetzen (Festfressen) der betroffenen Beschichtungsmitteleinrichtungen führen. Auch bei normalem Betrieb einer Beschichtungsanlage ist es nahezu ausgeschlossen, jedwedes in der Lackieranlage befindliche Gewinde vollständig von Beschichtungsmitteln oder anderen, das Gewinde beeinträchtigenden Mitteln zu isolieren. Sofern die Kopplungsstelle zwischen den Beschichtungsmitteleinrichtungen z.B. durch Lack, besonders gefährlich sind Zwei-Komponenten-Lacke, verschmutzt wird, besteht die Gefahr, dass die Beschichtungsmitteleinrichtungen nicht mehr zerstörungsfrei voneinander gelöst werden können. Ein effizientes sowie wartungs- und reinigungsfreundliches Kopplungskonzept ist somit nicht gegeben.

Darüber hinaus besteht bei Beschichtungsmitteleinrichtungen und den in Beschichtungsanlagen üblichen Drehzahlen von ungefähr 8.000-80.000 U/min die Gefahr eines unbeabsichtigten Lösens, z.B. eines von einer Turbine in Drehung versetzten Glockentellers. Sich bei einer Drehzahl zwischen 8.000-80.000 U/min lösende Teile können die Beschichtungsanlage und das zu beschichtende Bauteil massiv beschädigen. Die Gefahr des Lösens besteht insbesondere bei extremer Beschleunigung oder Abbremsung z.B. durch einen Roboter oder eine Turbine.

Ferner ist der Montage- und Demontageaufwand üblicher Beschichtungsmitteleinrichtungen relativ groß, was daraus resultiert, dass zum Aufschrauben mehrere Umdrehungen erforderlich sind, um eine belastbare Schraubverbindung zu bilden, z.B. bei einem Glockenteller in der Regel mindestens fünf Umdrehungen relativ zu der Glockentellerwelle. Ähnliches gilt für Ventile, die in der Regel mittels 3 bis 6 Umdrehungen aufgeschraubt werden. Eine Montage- und Demontage von Beschichtungsmitteleinrichtungen ist aufgrund Reinigungsbedarf und verschleißbedingtem Ersatz aber zwingend erforderlich. Eine Verschmutzung bestimmter Beschichtungsmitteleinrichtungen, wie z.B. einem Glockentellergewinde, könnte z.B. zu einer mechanischen Unwucht führen, was mit einer entsprechenden mechanischen Belastung der Lagereinheit verbunden ist und im Extremfall zu einem Ausfall der Lagereinheit führen kann.

Ferner fehlt es herkömmlichen Beschichtungsmitteleinrichtungen an einer Einsetz-/Ausrichthilfe, was ein Befestigen erschwert und den für eine Montage einer Beschichtungsmitteleinrichtung erforderlichen Zeitaufwand weiter erhöht.

Auch besteht bei Beschichtungsmitteleinrichtungen, z.B. elektrostatischen Zerstäubern, die Gefahr von Hochspannungsspitzen.

Dokument EP 1 157 747 A2 offenbart ein Beispiel eines Ventils mit herkömmlicher Gewindeverbindung. Dokument EP 1 674 161 A2 offenbart ein Beschichtungsanlagenbauteil, das ebenfalls ein Gewinde aufweist. Zum allgemeinen Stand der Technik kann ferner auf die US 4 810 149 A, die EP 0 191 501 A, die US 4 171 012 A, die WO 2008/120828A1, die US 4 988 127 A, die EP 0 273 016 A2 und die FR 2 863 681 verwiesen werden.

In Anbetracht obiger Ausführungen wird es Fachleuten anhand dieser Offenbarung ersichtlich, dass ein Bedarf an der Lösung oder Überwindung oben beschriebener Probleme oder Nachteile besteht. Diese Erfindung bezieht sich auf diesen Bedarf des Standes der Technik sowie auf andere Bedürfnisse, die Fachleuten anhand dieser Offenbarung ersichtlich werden.

Die Erfindung ist jedoch nicht auf Ausführungsformen beschränkt, die sämtliche eingangs genannten Probleme oder Nachteile des Standes der Technik beseitigen. Vielmehr beansprucht die Erfindung auch allgemein Schutz für die nachstehend beschriebenen Ausführungsformen.

Die sich aus vorstehend Genanntem ergebenden Aufgaben können mit den Merkmalen der Ansprüche 1 und 12 gelöst werden.

Die Erfindung betrifft die allgemeine technische Lehre, ein Beschichtungsanlagenbauteil mit zumindest einem Halteteil zu versehen, das vorzugsweise an einem Befestigungssockel des Beschichtungsanlagenbauteils angeordnet ist. Ferner betrifft die Erfindung die allgemeine technische Lehre, ein anderes Beschichtungsanlagenbauteil mit zumindest einer Halteeinrichtung zu versehen, die vorzugsweise an oder in einer Befestigungssockelaufnahme des anderen Beschichtungsanlagenbauteils angeordnet ist. Die Halterung oder Verbindung zwischen den Beschichtungsanlagenbauteilen, insbesondere zwischen Halteteil und Halteeinrichtung, ist vorgesehen, um eine verbesserte Funktion und Betriebsweise in Beschichtungs-/Lackieranlagen zu gewährleisten.

Gemäß der Erfindung wird ein Beschichtungsanlagenbauteil mit einem Halteteil zum lösbaren Verbinden mit einem anderen Beschichtungsanlagenbauteil vorgesehen.

Um die Beschichtungsanlagenbauteile besser voneinander unterscheiden zu können, wird das eine Beschichtungsanlagenbauteil mit "Beschichtungsanlagenbauteil" und das andere Beschichtungsanlagenbauteil als "Beschichtungsanlagenvorrichtung" bezeichnet.

Das Halteteil ist ein Gewinde mit Sonderkonfiguration. Nachfolgend wird das dem Beschichtungsanlagenbauteil zugeordnete Gewinde mit Halteteil-Gewinde und das der Beschichtungsanlagenvorrichtung zugeordnete Gewinde mit Halteeinrichtungs-Gewinde bezeichnet, um deren Unterscheidung zu erleichtern. Bei den Gewinden kann es sich um Außen- und Innengewinde handeln, die aneinandergeschraubt werden können.

Die Konfiguration des Halteteil-Gewindes ist vorzugsweise für ein Außengewinde gedacht, kann aber auch als Innengewinde vorgesehen werden.

Der Befestigungssockel und/oder das Halteteil-Gewinde sind insbesondere vorgesehen, um mit einer Befestigungssockelaufnahme und/oder einem Halteeinrichtungs-Gewinde funktionsgerecht zusammenzupassen, insbesondere um eine steckbare und/oder verdrehsicherbare Befestigung ("Schraube-Mutter-Prinzip") zu schaffen.

Das Beschichtungsanlagenbauteil zeichnet sich insbesondere aus durch Verwendung eines nicht genormten Halteteils, vorzugsweise eines Nicht-Norm-Gewindes, insbesondere eines Nicht-Metrischen-ISO-Gewindes. Das Beschichtungsanlagenbauteil kann sich ferner insbesondere auszeichnen durch Verwendung eines an sich genormten Halteteils, vorzugsweise eines Norm-Gewindes, insbesondere eines Metrischen-ISO-Gewindes, das jedoch bearbeitet ist, um von seiner Urform abzuweichen.

Vorteilhaft wird ein Beschichtungsanlagenbauteil mit einem Halteteil-Gewinde geschaffen, das verschiedenen Anforderungen in einer Beschichtungsanlage gerecht werden kann. Insbesondere kann eine große Abscherfläche realisiert werden, was zu einer Erhöhung der Sicherheit gegen Gewindeausbruch und einer Erhöhung des zulässigen Anzugsmoments führt. Besonders vorteilhaft ist, dass durch eine höhere erzielbare (Vor-)Spannung im Gewinde die Sicherheit gegen unbeabsichtigtes Lösen erhöht werden kann. Hingegen können die Auflageflächen der Gewindezähne bzw. Gewindeflanken der erfindungsgemäßen (Außen-) Gewinde gezielt verkleinert werden, was zu einer Verkleinerung möglicher Verklebungsflächen führt, und somit zu einer Verkleinerung des Losbrechmoments bei verklebten Gewinden. Darüber hinaus können die Gewindeflankeninnenwinkel der Gewindezähne verkleinert werden, was zu einer Reduzierung der Sprengkraft beim Lösen und/oder Spannen führt und damit zu einer Entlastung des Beschichtungsanlagenbauteils und/oder der Beschichtungsanlagenvorrichtung. Dies ist weiter von Vorteil, weil damit die Standzeit der Befestigungssockelaufnahme (z.B. das Mutter-Gewinde) erhöht wird, insbesondere, wenn die Beschichtungsanlagenvorrichtung oder zumindest deren Befestigungssockelaufnahme oder (Innen-) Gewinde aus Kunststoff hergestellt ist. Somit kann eine geringere Anfälligkeit gegen Beschädigungen bzw. Überbelastungen erzielt werden. Ferner kann der Montageaufwand z.B. durch Reduzierung der erforderlichen Einschraubumdrehungen verringert werden.

Es ist möglich, dass das Halteteil-Gewinde eine Steigung und zumindest einen Gewindezahn mit einer Gewindezahntiefe aufweist und das Verhältnis Gewindezahntiefe zu Steigung größer ist als ungefähr 0,3; 0,5; 0,7; 0,9; 1,1; 1,3 oder 1,5; und/oder kleiner ist als ungefähr 1,6; 1,4; 1,2; 1,0; 0,8; 0,6; oder 0,4. Beispielsweise kann die Gewindezahntiefe 2mm und die Steigung 3mm betragen, was zu einem Verhältnis von 0,66 führt.

Der Gewindezahn könnte auch als Gewindeflanke bezeichnet werden. Als Gewindezahn wird der vorspringende, wendelartig verlaufende Abschnitt des Gewindes bezeichnet, wobei als Gewindegang oder Gewinderille der vertiefte, wendelartig verlaufende Abschnitt des Gewindes bezeichnet wird.

Beispielsweise ist bei einer Ventilschnittstelle ein Verhältnis Gewindezahntiefe zu Steigung von 0,5 +/- 0,3 oder 1,125 +/- 0,5 vorteilhaft, wohingegen bei einer Glockentellerschnittstelle ein Verhältnis Gewindezahntiefe zu Steigung von 1,0 +/- 0,5 vorteilhaft ist.

Die Gewindezahntiefe ist der Abstand zwischen Gewindezahnspitze des Gewindezahns und zugeordnetem (benachbartem) Gewindegrund, genauer gesagt der Abstand zwischen Scheitel Gewindezahnspitze und Scheitel Gewindegrund (in Radialrichtung bzw. orthogonal zu einer Zentralachse des Außengewindes und/oder des Befestigungssockels).

Es ist möglich, dass das Halteteil-Gewinde zumindest einen Gewindezahn aufweist, der nicht achsensymmetrisch ist, vorzugsweise nicht achsensymmetrisch zu einer Bezugsgeraden, die sich ausgehend von einer Zentralachse des Außengewindes und/oder des Befestigungssockels orthogonal zu der Gewindezahnspitze des Gewindezahns (bzw. deren Scheitel) erstreckt.

Der Gewindezahn oder zumindest die Basis des Gewindezahns kann z.B. im Wesentlichen in Form eines nicht gleichschenkligen Dreiecks oder eines nicht gleichschenkligen Trapezes mit oder ohne abgerundetem Gewindegrund oder Gewindezahnspitze ausgebildet sein. Der Gewindegrund und/oder die Gewindezahnspitze können auch abgeflacht oder abgeschrägt ausgebildet sein.

Vorzugsweise hat das Halteteil-Gewinde aber zumindest einen Gewindezahn mit abgerundeter Gewindezahnspitze. Ferner umfasst der Gewindezahn einen ersten Gewindeflankenschnitt mit einem ersten Gewindeflankeninnenwinkel, einen zweiten Gewindeflankenabschnitt mit einem zweiten Gewindeflankeninnenwinkel, und einen dritten, reduzierten Gewindeflankenabschnitt (z.B. abgestuft, abgeschrägt, zur Gewindezahnspitze gekrümmt oder abgezweigt oder andersartig reduziert).

Der dritte Gewindeflankenabschnitt wird nachfolgend als reduzierter Gewindeflankenabschnitt bezeichnet und ist so angeordnet, dass er Platz bzw. Raum für ein an der Beschichtungsanlagenvorrichtung vorgesehenes Sperrprofil schafft, vorzugsweise indem er seitlich reduziert ist und/oder abgeschrägt zwischen Gewindeflankenspitze und zweitem Gewindeflankenabschnitt positioniert ist. Der reduzierte Gewindeflankenabschnitt und das Sperrprofil verhindern, dass zwei nicht kompatible Bauteile aneinandergekoppelt werden, was zur Beschädigung eines oder beider Bauteile oder sogar zur Beschädigung des zu beschichtenden Bauteils führen kann. Der reduzierte Gewindeflankenabschnitt ist vorzugsweise angeordnet, um im eingeschraubten Zustand das Halteeinrichtungs-Gewinde der Beschichtungsanlagenvorrichtung bzw. dessen Gewindezahn nicht zu kontaktieren. Ferner gewährleistet der reduzierte Gewindeflankenabschnitt (im eingeschraubten Zustand) einen Zwischenraum zum Gewindezahn, zum Gewindegrund und/oder zum Sperrprofil des Halteeinrichtungs-Gewindes, der vorteilhaft als Schmutzaufnahme dienen kann oder die am Halteeinrichtungs-Gewinde bereitgestellte Schmutzaufnahme vergrößern kann.

Der erste Gewindeflankenabschnitt ist vorzugsweise zwischen dem (benachbarten) Gewindegrund und der Gewindezahnspitze angeordnet, wobei der zweite Gewindeflankenabschnitt zwischen dem anderen (benachbarten) Gewindegrund und der Gewindezahnspitze und/oder dem reduzierten Gewindeflankenabschnitt angeordnet sein kann. Der reduzierte Gewindeflankenabschnitt ist zwischen Gewindezahnspitze und zweitem Gewindeflankenabschnitt und vorzugsweise Gewindegrund angeordnet werden.

Der reduzierte Gewindeflankenabschnitt zweigt vom zweiten Gewindeflankenabschnitt ab und erstreckt sich zur Gewindezahnspitze. Der reduzierte Gewindeflankenabschnitt ist vorzugsweise zumindest teilweise geradlinig ausgebildet und kann einen dritten Gewindeflankeninnenwinkel aufweisen.

Der erste Gewindeflankenabschnitt, der zweite Gewindeflankenabschnitt und/oder der reduzierte Gewindeflankenabschnitt sind vorzugsweise im Wesentlichen geradlinig vorgesehen, um auf vorteilhafte Weise die Möglichkeit der Lehrung mit einem klassischen Lehrensystem (Lehrdorne und Lehrringe) zu gewährleisten. Insbesondere der reduzierte Gewindeflankenabschnitt kann jedoch auch gekrümmt, abgestuft oder abgeschrägt ausgebildet bzw. reduziert werden.

Der Übergang zwischen dem zweiten Gewindeflankenabschnitt und dem reduzierten Gewindeflankenabschnitt und/oder der Übergang zwischen dem reduzierten Gewindeflankenabschnitt und der Gewindezahnspitze kann z.B. mittels einer Krümmung, knickfrei oder mittels eines Knicks erfolgen.

Der erste Gewindeflankeninnenwinkel ist größer als ungefähr 17,5°; 19,0°; 27,5°; 37,5° oder 47,5°; und vorzugsweise kleiner als ungefähr 32,5°, 42,5°; oder 52,5°.

Ferner kann der zweite Gewindeflankeninnenwinkel und/oder der dritte Gewindeflankeninnenwinkel größer sein als ungefähr 27,5°; 28,0°; 37,5°; 47,5° oder 57,5°; und/oder kleiner sein als ungefähr 42,5°; 52,5° oder 62,5°.

Beispielsweise ist bei einer Ventilschnittstelle oder einer Glockentellerschnittstelle ein erster Gewindeflankeninnenwinkel von ungefähr 20° +/- 3° vorteilhaft, wohingegen ein zweiter Gewindeflankeninnenwinkel von ungefähr 28° +/- 3° vorteilhaft ist.

Der erste Gewindeflankeninnenwinkel ist kleiner als der zweite Gewindeflankeninnenwinkel.

Der erste Gewindeflankeninnenwinkel, der zweite Gewindeflankeninnenwinkel und/oder der dritte Gewindeflankeninnenwinkel werden relativ zu einer Bezugsgeraden gemessen, die sich ausgehend von einer Zentralachse des Halteteil-Gewindes und/oder des Befestigungssockels orthogonal zu einem zugehörigen Gewindezahn erstreckt, insbesondere zu einem fiktiven Schnittpunkt, der gebildet wird durch fiktive Verlängerungsgeraden der ersten und zweiten Gewindeflankenabschnitte. Es ist auch möglich, eine Bezugsgerade zu verwenden, die sich ausgehend von einer Zentralachse des Halteteil-Gewindes und/oder des Befestigungssockels orthogonal zu der Gewindezahnspitze des zugehörigen Gewindezahns (bzw. deren Scheitel) erstreckt.

Der erste Gewindeflankeninnenwinkel, der zweite Gewindeflankeninnenwinkel und/oder der dritte Gewindeflankeninnenwinkel sind vorzugsweise spitze Winkel, also umfassend Winkel kleiner oder gleich 90°.

Vorteilhaft sind insbesondere flache oder kleine erste und zweite Gewindeflankeninnenwinkel (z.B. kleiner als 30°), wodurch die Sprengkraft im fest verschraubten Zustand und/oder beim Lösen reduziert wird. Somit kann auch die Belastung auf eine Beschichtungsanlagenvorrichtung, an oder in der das Beschichtungsanlagenbauteil zu befestigen ist, verringert werden und damit die Gefahr von Beschädigungen (z.B. Gewindeausbruch oder Spannungsrisse).

Der erste Gewindeflankenabschnitt des Halteteil-Gewindes kann eine Auflagefläche zum Kontaktieren des Halteeinrichtungs-Gewindes der Beschichtungsanlagenvorrichtung beim Spannen bzw. Festziehen bilden (Spannfläche). Der zweite Gewindeflankenabschnitt kann eine Auflagefläche zum Kontaktieren des Halteeinrichtungs-Gewindes der Beschichtungsanlagenvorrichtung beim Lösen bilden (Lösefläche). Das Verhältnis Spannfläche zu Lösefläche (Spannfläche / Lösefläche) liegt insbesondere zwischen ungefähr 0,5 bis 6. Vorzugsweise entspricht das Verhältnis Spannfläche zu Lösefläche im Wesentlichen dem Verhältnis der Fläche, die vom ersten Gewindeflankenabschnitt gebildet wird, zu der Fläche, die vom zweiten Gewindeflankenabschnitt gebildet wird, und/oder im Wesentlichen dem Verhältnis erster Gewindeflankenabschnitt zu zweitem Gewindeflankenabschnitt. Beispielsweise kann das Verhältnis Spannfläche zu Lösefläche (bzw. das Verhältnis der Fläche, die vom ersten Gewindeflankenabschnitt gebildet wird, zu der Fläche, die vom zweiten Gewindeflankenabschnitt gebildet wird, und/oder das Verhältnis erster Gewindeflankenabschnitt zu zweitem Gewindeflankenabschnitt) größer sein als 0,5; 1,5; 2,5; 3,5; 4,5; oder 5,5, und/oder kleiner sein als 1,0; 2,0; 3,0; 4,0; 5,0 oder 6,0.

Besonders vorteilhaft ist bei einer Ventilschnittstelle ein Verhältnis Spannfläche zu Lösefläche von ungefähr 1,3 +/-0,5, wobei bei einer Glockentellerschnittstelle ein Verhältnis Spannfläche zu Lösefläche von ungefähr 1,0 +/- 0,5 besonders vorteilhaft ist.

Die Auflagefläche des ersten Gewindeflankenabschnitts ist vorzugsweise größer als die Auflagefläche des zweiten Gewindeflankenabschnitts, insbesondere aufgrund des vom zweiten Gewindeflankenabschnitt abzweigenden reduzierten Gewindeflankenabschnitts.

Die Auflagefläche beim Spannen bzw. Festziehen ist die Fläche (Spannfläche), mit der das Halteteil-Gewinde (bzw. dessen erster Gewindeflankenabschnitt) das Halteeinrichtungs-Gewinde (bzw. dessen ersten Gewindeflankenabschnitt) beim Spannen bzw. Festziehen kontaktiert. Die Auflagefläche beim Lösen ist die Fläche (Lösefläche), mit der das Halteteil-Gewinde (bzw. dessen zweiter Gewindeflankenabschnitt) das Halteeinrichtungs-Gewinde (bzw. den zweiten Gewindeflankenabschnitt) beim Lösen aus dem angespannten bzw. festgezogenen Zustand kontaktiert. Insbesondere wird die Spannfläche im Wesentlichen festgelegt durch den Abschnitt zwischen Gewindegrund und Gewindeflankenspitze (erster Gewindeflankenabschnitt), wobei die Lösefläche im Wesentlichen festgelegt wird durch den Abschnitt zwischen Gewindegrund und reduziertem Gewindeflankenabschnitt (zweite Gewindeflankenabschnitt).

Der reduzierte Gewindeflankenabschnitt bildet keine Kontaktfläche für das Innengewinde (weder beim Spannen noch beim Lösen), sondern ist vorgesehen, um vorzugsweise geringfügig beabstandet dem Sperrprofil gegenüber zu stehen.

Das Halteteil-Gewinde kann eine Steigung von größer als ungefähr 0,5mm; 1,5mm; 2,5mm; 3,5mm; oder 4,5mm; und/oder von kleiner als ungefähr 0,75mm; 1,0mm; 2,0mm; 3,0mm; 4,0mm; oder 5,0mm mm aufweisen.

Beispielsweise ist bei einer Ventilschnittstelle eine Steigung von 1,8mm +/- 0,25mm oder von 3,5mm +/- 0,75mm vorteilhaft, wohingegen bei einer Glockentellerschnittstelle eine Steigung von z.B. 0,75mm +/- 0,2mm besonders vorteilhaft sein kann.

Aufgrund der gegenüber bei herkömmlichen Beschichtungsanlagenbauteilen verwendeten größeren Steigung kann das erfindungsgemäße Beschichtungsanlagenbauteil mit einem geringeren Montageaufwand ein- und ausgeschraubt werden, z.B. mittels wenigen Umdrehungen oder in nur ungefähr 2 oder weniger als 2 Umdrehungen anstatt der oft üblichen 3 bis 6 Umdrehungen bei metrischen Gewinden. Bevorzugt wird die Steigung in Abhängigkeit von der Materialpaarung so ausgelegt, dass eine Selbsthemmung sicher gewährleistet wird.

Das Halteteil-Gewinde kann einen Gewindezahn mit einer Gewindezahntiefe umfassen, die größer ist als ungefähr 0,2mm; 0,6mm; 1,0mm; 1,4mm; oder 1,8 mm; und/oder kleiner als ungefähr 2,0mm; 1,6mm; 1,2mm; 0,8mm; oder 0,4mm.

Das Halteteil-Gewinde bzw. der Gewindezahn kann vorgesehen sein, um einmal, weniger als einmal oder mehr als einmal um den Befestigungssockel umzulaufen. Das Halteteil-Gewinde bzw. der Gewindezahn kann also vorgesehen sein, um sich um ungefähr 360° oder mehr oder weniger als 360° um den Befestigungssockel herum zu erstrecken.

Das Halteteil-Gewinde kann eingängig sein oder mehrgängig, z.B. 2-gängig, 3-gängig oder 4-gängig. Somit wird ein Einschrauben mit weniger Umdrehungen als bei herkömmlichen Beschichtungsanlagenbauteilen ermöglicht, was zu einem deutlich geringeren Montageaufwand führt.

Beispielsweise ist bei einer Ventilschnittstelle eine ein- oder mehrgängige (z.B. 2-gängige) Ausbildung vorteilhaft, wohingegen bei einer Glockentellerschnittstelle eine eingängige Ausbildung vorteilhaft ist.

Es ist möglich, dass das Halteteil-Gewinde und/oder der Gewindezahn zumindest einen abgerundeten Gewindegrund und der Gewindezahn eine abgerundete Gewindezahnspitze aufweist und der Rundungsradius vorzugsweise größer ist als 0,01mm; 0,02mm; 0,07mm; 0,12mm; 0,22mm; 0,32mm; oder 0,42mm; und/oder kleiner ist als 0,015mm; 0,045mm; 0,095mm; 0,17mm; 0,27mm; 0,37mm oder 0,47mm.

Aufgrund der gegenüber bei herkömmlichen Beschichtungsanlagenbauteilen verwendeten (größeren) Rundungsradien kann die Gefahr von Hochspannungsspitzen verringert werden, die z.B. bei elektrostatischen Zerstäubern auftreten können. Ferner werden Kerbspannungen minimiert, wodurch ein höheres Anzugsmoment möglich wird.

Es ist aber auch möglich, dass die Gewindezahnspitze und/oder der Gewindegrund des Halteteil-Gewindes im Wesentlichen geradlinig, abgeschrägt oder abgeflacht ausgebildet ist.

Der Befestigungssockel und/oder das Halteteil-Gewinde können eine Entgratschneide bzw. einen Entgratschnitt als Zentrier- und/oder Ausrichthilfe umfassen. Als Entgratschneide bzw. Entgratschnitt ist die teilweise oder vollständige Entfernung des 1. unvollständigen Gewindegangs zu verstehen. Die Entgratschneide kann insbesondere an einem Innengewinde, jedoch auch an einem Außengewinde bereitgestellt werden.

Mittels der Entgratschneide bzw. dem Entgratschnitt kann die Verkantungsgefahr beim Ansetzen oder Einschrauben reduziert werden, was zu einer vereinfachten und schnelleren Montage und einer Reduzierung der Gefahr von Gewindebeschädigungen führt. Bei Gewinden in Kunststoffen dient der Entgratschnitt der Vermeidung von Beschädigungen bzw. Deformationen. Ebenfalls wird ein leichterer Fügevorgang erreicht, da die beiden Komponenten (z.B. Ventil und zugehöriges Gehäuse) den Gewindeanfang beim Fügen über eine kleine Führungsfläche besser finden. Ein Verkanten ist somit nahezu nicht möglich.

Der Befestigungssockel, an dem das Halteteil-Gewinde vorzugsweise angeordnet sein kann, kann zumindest abschnittsweise oder in seiner Gesamtheit im Wesentlichen zylinderförmig ausgebildet sein, und/oder zumindest abschnittsweise oder in seiner Gesamtheit im Wesentlichen konusförmig sein. Der Befestigungssockel kann an seinem distalen Ende offen oder geschlossen ausgebildet sein und/oder geschlossenwandig ausgebildet sein. Es ist aber auch möglich, dass der Befestigungssockel mehrere axial verlaufende Schlitze aufweist, die von der Stirnseite des Befestigungssockels ausgehen und den Befestigungssockel an seinem distalen Ende in mehrere Sockelsektoren unterteilen, die radial nachgiebig sind, um sich an das Halteeinrichtungs-Gewinde der Beschichtungsanlagenvorrichtung, vorzugsweise ein konisches Innengewinde, anzupassen.

Es ist auch möglich, dass das Halteteil-Gewinde einen im Wesentlichen symmetrischen Gewindezahn umfasst, z.B. in Form eines gleichschenkligen Dreiecks oder eines gleichschenkligen Trapezes, und/oder der erste Gewindeflankeninnenwinkel und der zweite Gewindeflankeninnenwinkel im Wesentlichen gleich groß sind.

Gemäß einer weiteren Ausführungsform der Erfindung wird ein Beschichtungsanlagenbauteil mit einem Befestigungssockel und zumindest einem an dem Befestigungssockel angeordneten Halteteil-Gewinde zur Halterung an oder in einer Beschichtungsanlagenvorrichtung vorgesehen. Insbesondere ist der Befestigungssockelund/oder das Halteteil-Gewinde vorgesehen, um eine steckbare Halterung und/oder eine Verdrehsicherung bereitzustellen.

Das Halteteil-Gewinde kann symmetrisch oder asymmetrisch, vorzugsweise rotationssymmetrisch oder rotationsasymmetrisch reduziert sein, wobei sich der oder die reduzierten Abschnitte im Wesentlichen in axialer Richtung oder in nicht axialer Richtung ("schräg") des Befestigungssockelsund/oder des Halteteil-Gewindes erstrecken. Das Halteteil-Gewinde kann einen oder mehrere reduzierte Abschnitte umfassen.

Das Halteteil-Gewinde kann bereitgestellt sein, um zumindest einen oder mehrere sich in axialer Richtung des Befestigungssockels erstreckende Gewinde-(Zahn)-freie Abschnitte vorzusehen. Es ist möglich, dass das Halteteil-Gewinde bereitgestellt ist, um einen ersten sich axial erstreckenden Abschnitt, der Gewindezähne mit einer ersten Gewindezahntiefe umfasst, und einen zweiten sich axial erstreckenden Abschnitt, der Gewindezähne mit einer zweiten Gewindezahntiefe umfasst, vorzusehen, wobei die erste Gewindezahntiefe größer oder kleiner ist als die zweite Gewindezahntiefe. Ferner kann das Halteteil-Gewinde bereitgestellt sein, um einen oder mehrere seitliche axiale Abflachungen vorzusehen, und/oder um eine oder mehrere lineare und/oder gekrümmte, sich axial erstreckende Reduzierungen zu erzielen. Die lineare, sich axial erstreckende Reduzierung kann insgesamt linear erfolgen oder zumindest einen Knick aufweisen. Die gekrümmte, sich axial erstreckende Reduzierung kann z.B. konvexartig oder konkavartig erfolgen. Die vorstehend genannten sich axial erstreckenden Abschnitte können auch nicht-axial vorgesehen sein, sich also schräg zur Zentralachse des Befestigungssockels und/oder des Halteteil-Gewindes erstrecken. Die Reduzierung kann ohne Schrägungswinkel oder mit Schrägungswinkel verlaufen. Vorzugsweise ist die Reduzierung vorgesehen, um den Befestigungssockel nicht zu durchdringen. Somit kann der Befestigungssockel nach dem "Schlüssel-Loch-Prinzip" einsteckbar und/oder verdrehsicherbar ausgebildet sein. Der Befestigungssockel bzw. eine Wandung des Befestigungssockels kann hierzu also sich in axialer Richtung erstreckende gewinde(zahn)freie oder mit gegenüber anderen Wandungsabschnitten der Wandung mit flacheren Gewindegängen oder Gewindezähnen versehene Wandungsabschnitte aufweisen, welche vorzugsweise rotationssymmetrisch oder rotationsunsymmetrisch angeordnet sind. Dadurch kann eine einfache und sichere Verdrehsicherung des steckbaren Befestigungssockels realisiert werden.

Es ist möglich, dass das Halteteil-Gewinde sich über mehr als 45°, 90°, 135°, 180°, 225°, 270°, 315° oder 360° an der Außenfläche des Befestigungssockels erstreckt, und/oder sich über weniger als 70°, 115°, 160°, 205°, 250°, 295° 340° oder 385° an der Außenfläche des Befestigungssockels erstreckt. Beispielsweise kann eine Wandung eines vorzugsweise steckbaren Befestigungssockels zur Verdrehsicherung mit einer zumindest teilweise umlaufenden Ringnut oder Halteleiste versehen sein, wodurch eine reibschlüssige Verdrehsicherung einfach realisiert werden kann.

Es ist möglich, dass der vorzugsweise steckbare Befestigungssockel verdrehsicherbar ist. Die Verdrehsicherung kann beispielsweise nach dem Einstecken des steckbaren Befestigungssockels in beispielsweise eine Aufnahmebuchse bzw. Befestigungssockelaufnahme einer Beschichtungsanlagenvorrichtung durchgeführt werden.

Gemäß der Erfindung wird eine Beschichtungsanlagenvorrichtung mit zumindest einer Halteeinrichtung zum lösbaren Verbinden mit einem Beschichtungsanlagenbauteil bzw. einem Halteteil-Gewinde wie oben beschriebenen bereitgestellt.

Die Halteeinrichtung kann z.B. ein Gewinde mit Sonderkonfiguration sein.

Es ist möglich, dass die Befestigungssockelaufnahme und/oder das Halteeinrichtungs-Gewinde vorgesehen sind, um eine steckbare Halterung und/oder eine Verdrehsicherung bereitzustellen.

Die Halteeinrichtung kann z.B. an oder in der Befestigungssockelaufnahme angeordnet werden, wenn die Halteeinrichtung ein Innengewinde ist.

Die Konfiguration des Halteeinrichtungs-Gewindes ist vorzugsweise für ein Innengewinde gedacht, kann aber auch als Außengewinde vorgesehen werden.

Der Befestigungssockel und/oder das Halteteil-Gewinde mit Sonderkonfiguration sind vorzugsweise vorgesehen, um mit der Befestigungssockelaufnahme und/oder dem Halteeinrichtungs-Gewinde mit Sonderkonfiguration zusammenzupassen ("Schraube-Mutter-Prinzip" bzw. "Stecker-Steckdose-Prinzip"). Somit gelten die obigen Beschreibungen des Befestigungssockelsund/oder des Halteteil-Gewindes mit Sonderkonfiguration sinngemäß auch für die Befestigungssockelaufnahme und/oder das Halteeinrichtungs-Gewinde mit Sonderkonfiguration.

Somit kann das Halteeinrichtungs-Gewinde ebenfalls eine Steigung und zumindest einen Gewindezahn mit einer Gewindezahntiefe aufweisen und das Verhältnis Gewindezahntiefe zu Steigung kann größer sein als ungefähr 0,3; 0,5; 0,7; 0,9; 1,1; 1,3 oder 1,5; und/oder kleiner als ungefähr 1,6; 1,4; 1,2; 1,0; 0,8; 0,6; oder 0,4.

Die Gewindezahntiefe ist der Abstand zwischen Gewindezahnspitze des Gewindezahns (bzw. deren Scheitel) und zugeordnetem (benachbarten) Gewindegrund (bzw. Schmutzaufnahme), genauer gesagt, der Abstand zwischen Scheitel Gewindezahnspitze und Scheitel Gewindegrund (bzw. Schmutzaufnahme) (in Radialrichtung bzw. orthogonal zu einer Zentralachse des Innengewindes und/oder der Befestigungssockelaufnahme).

Zumindest die Basis des Gewindezahns kann z.B. im Wesentlichen in Form eines nicht gleichschenkligen Dreiecks oder eines nicht gleichschenkligen Trapezes mit oder ohne abgerundetem Gewindegrund oder Gewindezahnspitze ausgebildet sein. Der Gewindegrund und/oder die Gewindezahnspitze können auch abgeflacht oder abgeschrägt ausgebildet sein.

Das Halteeinrichtungs-Gewinde kann zumindest einen Gewindezahn mit vorzugsweise abgerundeter Gewindezahnspitze umfassen. Ferner kann der Gewindezahn einen ersten Gewindeflankenabschnitt mit einem ersten Gewindeflankeninnenwinkel und/oder einen zweiten Gewindeflankenabschnitt mit einem zweiten Gewindeflankeninnenwinkel umfassen.

Die Beschichtungsanlagenvorrichtung, insbesondere ein Gewindezahn des Halteeinrichtungs-Gewindes umfasst ferner ein Sperrprofil, um eine Sperrung oder einen Widerstand für ungeeignete Beschichtungsanlagenbauteile zu schaffen, indem es in den Gewindegang bzw. die Gewinderille des Halteeinrichtungs-Gewindes hineinragt. Das Sperrprofil ist somit vorzugsweise ein vorspringendes Teil, das z.B. gekrümmt, abgestuft oder abgeschrägt ausgebildet werden kann. Das Sperrprofil kann an einer oder mehreren Stellen in den Gewindegang hineinragen oder sich über den im Wesentlichen gesamten Gewindegang erstrecken.

Das Sperrprofil kann am ersten oder zweiten Gewindeflankenabschnitt, am Gewindegrund und/oder der Schmutzaufnahme vorgesehen sein. Das Sperrprofil kann aber auch außerhalb des Halteeinrichtungs-Gewindes an der Beschichtungsanlagenvorrichtung vorgesehen werden.

Das Sperrprofil ist zwischen einem Gewindegrund (vorzugsweise umfassend eine Schmutzaufnahme) und dem zweiten Gewindeflankenabschnitt angeordnet, wobei der zweite Gewindeflankenabschnitt zwischen dem Sperrprofil und der Gewindezahnspitze angeordnet sein kann. Der erste Gewindeflankenabschnitt kann zwischen Gewindezahnspitze und einem anderen benachbarten Gewindegrund (vorzugsweise umfassend eine Schmutzaufnahme) angeordnet werden.

Das Sperrprofil kann z.B. vom zweiten Gewindeflankenabschnitt abzweigen und sich zum Gewindegrund erstrecken.

Der erste Gewindeflankeninnenwinkel des Halteeinrichtungs-Gewinde ist größer als ungefähr 17,5°; 19,0°; 27,5°; 37,5° oder 47,5°; und vorzugsweise kleiner als ungefähr 32,5°, 42,5°; oder 52,5°.

Ferner kann der zweite Gewindeflankeninnenwinkel des Halteeinrichtungs-Gewindes größer sein als ungefähr 27,5°; 28,0°; 37,5°; 47,5° oder 57,5°; und/oder kleiner als ungefähr 42,5°; 52,5° oder 62,5°.

Der erste Gewindeflankeninnenwinkel ist kleiner als der zweite Gewindeflankeninnenwinkel. Der erste Gewindeflankeninnenwinkel und der zweite Gewindeflankeninnenwinkel werden relativ zu einer Bezugsgeraden gemessen, die sich ausgehend von einer Zentralachse des Halteeinrichtungs-Gewinde und/oder der Befestigungssockelaufnahme orthogonal zu einem zugehörigen Gewindezahn erstreckt, insbesondere zu einem fiktiven Schnittpunkt, der gebildet wird durch fiktive Verlängerungsgeraden der ersten und zweiten Gewindeflankenabschnitte. Es ist auch möglich, eine Bezugsgerade zu verwenden, die sich ausgehend von einer Zentralachse des Halteeinrichtungs-Gewinde und/oder der Befestigungssockelaufnahme orthogonal zu der Gewindezahnspitze des zugehörigen Gewindezahns (bzw. deren Scheitel) erstreckt.

Der erste Gewindeflankeninnenwinkel und/oder der zweite Gewindeflankeninnenwinkel des Halteeinrichtungs-Gewindes sind vorzugsweise spitze Winkel, also umfassend Winkel kleiner oder gleich 90°.

Der erste Gewindeflankenabschnitt des Halteeinrichtungs-Gewindes dient als Auflagefläche zur Kontaktierung des ersten Gewindeflankenabschnitts des Halteteil-Gewindes beim Spannen bzw. Festziehen, wobei der zweite Gewindeflankenabschnitt des Halteeinrichtungs-Gewindes als Auflagefläche zur Kontaktierung des zweiten Gewindeflankenabschnitts des Halteteil-Gewindes beim Lösen dient.

Das Halteeinrichtungs-Gewinde kann wie das Halteteil-Gewinde eine Steigung von größer als ungefähr 0,5mm; 1,5mm; 2,5mm; 3,5mm; oder 4,5mm aufweisen; und/oder von kleiner als ungefähr 1,0mm; 2,0mm; 3,0mm; 4,0mm; oder 5,0mm.

Das Halteeinrichtungs-Gewinde kann auch einen Gewindezahn mit einer Gewindezahntiefe umfassen, die größer ist als ungefähr 0,2mm; 0, 6mm; 1,0mm; 1,4mm; oder 1,8mm; und/oder kleiner als ungefähr 2,0mm; 1,6mm; 1,2mm; 0,8mm; oder 0,4mm.

Das Halteeinrichtungs-Gewinde bzw. der Gewindezahn kann vorgesehen sein, um einmal, weniger als einmal oder mehr als einmal um die Befestigungssockelaufnahme umzulaufen. Das Halteeinrichtungs-Gewinde bzw. der Gewindezahn kann also vorgesehen sein, um sich um ungefähr 360° oder mehr oder weniger als 360° um die Befestigungssockelaufnahme herum zu erstrecken.

Das Halteeinrichtungs-Gewinde kann eingängig sein oder mehrgängig, z.B. 2-gängig, 3-gängig oder 4-gängig.

Das Halteeinrichtungs-Gewinde und/oder ein Gewindezahn des Halteeinrichtungs-Gewinde kann einen vorzugsweise abgerundeten Gewindegrund aufweisen. Der Gewindegrund kann zumindest eine vorzugsweise abgerundete Schmutzaufnahme oder Schmutztasche umfassen. Die Schmutzaufnahme dient zur Aufnahme abgelöster Beschichtungsmittelpartikel, was z.B. das Ausdrehmoment reduziert.

Es ist möglich, dass der Rundungsradius des Gewindegrunds und/oder der Schmutzaufnahme und/oder der Gewindezahnspitze größer ist als 0,01mm; 0,02mm; 0,07mm; 0,12mm; 0,22mm; 0,32mm; oder 0,42mm; und/oder kleiner ist als 0,015mm; 0,045mm; 0,095mm; 0,17mm; 0,27mm; 0,37mm oder 0,47mm.

Die Gewindezahnspitze, der Gewindegrund und/oder die Schmutzaufnahme können aber auch im Wesentlichen geradlinig, abgeschrägt oder abgeflacht ausgebildet werden.

Die Befestigungssockelaufnahme und/oder das Halteeinrichtungs-Gewinde können eine Entgratschneide bzw. einen Entgratschnitt als Zentrier- und/oder Ausrichthilfe umfassen.

Es ist möglich, dass das Halteeinrichtungs-Gewinde einen Gewindezahn umfasst und zumindest die Basis des Gewindezahns im Wesentlichen symmetrisch ausgebildet ist, z.B. in Form eines im Wesentlichen gleichschenkligen Dreiecks oder eines im Wesentlichen gleichschenkligen Trapezes, und/oder der erste Gewindeflankeninnenwinkel und der zweite Gewindeflankeninnenwinkel im Wesentlichen gleich groß sind.

Die Befestigungssockelaufnahme kann zumindest abschnittsweise oder in seiner Gesamtheit im Wesentlichen zylinderförmig ausgebildet sein, und/oder zumindest abschnittsweise oder in seiner Gesamtheit im Wesentlichen konusförmig sein.

Die Befestigungssockelaufnahme und/oder das Halteeinrichtungs-Gewinde können symmetrisch oder asymmetrisch, vorzugsweise rotationssymmetrisch oder rotationsasymmetrisch reduziert sein, wobei sich der reduzierte Abschnitt im Wesentlichen in axialer Richtung oder in nicht axialer Richtung ("schräg") der Befestigungssockelaufnahme und/oder des Halteeinrichtungs-Gewindes erstreckt. Die Befestigungssockelaufnahme und/oder das Halteeinrichtungs-Gewinde können einen oder mehrere reduzierte Abschnitte umfassen. Die Befestigungssockelaufnahme und/oder das Innengewinde können bereitgestellt sein, um zumindest einen sich in axialer Richtung erstreckenden Gewinde-(Zahn-) freien Abschnitt vorzusehen. Es ist möglich, dass die Befestigungssockelaufnahme und/oder das Halteeinrichtungs-Gewinde bereitgestellt sind, um einen ersten sich axial erstreckenden Abschnitt, der Gewindezähne mit einer ersten Gewindezahntiefe umfasst, und einen zweiten sich axial erstreckenden Abschnitt, der Gewindezähne mit einer zweiten Gewindezahntiefe umfasst, vorzusehen, wobei die erste Gewindezahntiefe größer oder kleiner ist als die zweite Gewindezahntiefe. Ferner können die Befestigungssockelaufnahme und/oder das Halteeinrichtungs-Gewinde bereitgestellt sein, um zumindest eine seitliche axiale Abflachung vorzusehen, und/oder um eine lineare und/oder gekrümmte, sich axial erstreckende Reduzierung zu erzielen. Die lineare, sich axial erstreckende Reduzierung kann insgesamt linear erfolgen oder zumindest einen Knick aufweisen. Die gekrümmte, sich axial erstreckende Reduzierung kann z.B. konvexartig oder konkavartig erfolgen. Die vorstehend genannten sich axial erstreckenden Abschnitte können auch nicht-axial vorgesehen sein, sich also schräg zur Zentralachse der Befestigungssockelaufnahme und/oder des Halteeinrichtungs-Gewindes erstrecken. Die Reduzierung kann ohne Schrägungswinkel oder mit Schrägungswinkel verlaufen.

Die Befestigungssockelaufnahme und/oder das Halteeinrichtungs-Gewinde können vorgesehen sein, um eine steckbare Halterung und/oder eine Verdrehsicherung bereitzustellen.

Die Beschichtungsanlage ist vorzugsweise eine Lackieranlage.

Vorzugsweise hat das Beschichtungsanlagenbauteil und/oder der Befestigungssockel eine Beschichtungsmittelöffnung, die vorgesehen ist, um an eine Beschichtungsmittelöffnung der Beschichtungsanlagenvorrichtung gekoppelt zu werden.

Das Beschichtungsanlagenbauteil und/oder die Beschichtungsanlagenvorrichtung ist vorzugsweise vorgesehen, um Beschichtungsmittel (z.B. Ein- oder Mehr-Komponenten-Lack) und/oder eine Ausgabe von Beschichtungsmittel zu beeinflussen und hat insbesondere einen Beschichtungsmitteleingang und/oder einen Beschichtungsmittelausgang. Das Beschichtungsanlagenbauteil und/oder die Beschichtungsanlagenvorrichtung können vorgesehen sein, um zumindest abschnittsweise von Beschichtungsmittel benetzt und/oder durchströmt zu werden.

Das Halteteil-Gewinde oder das Halteeinrichtungs-Gewinde kann ein Außengewinde sein. Das Außengewinde und/oder ein Gewindezahn des Außengewindes kann einen Gewinderadius (Gewindeaußenradius) umfassen, der sich ausgehend von einer Zentralachse des Außengewindes und/oder des Befestigungssockels orthogonal zu einer Gewindezahnspitze (bzw. deren Scheitel) erstreckt und größer sein kann als ungefähr 4,0mm; 6,0mm; 8,0mm 10,0mm; 12,0mm; 14,0mm; 20,0mm; 25,0mm; oder 35,0mm; und/oder kleiner sein kann als ungefähr 5,0mm; 7,0mm; 9,0mm; 11,0mm; 13,0mm; 15,0mm; 22,5mm; 30,0mm; oder 40,0mm.

Das Halteteil-Gewinde oder das Halteeinrichtungs-Gewinde kann ein Innengewinde sein. Das Innengewinde und/oder ein Gewindezahn des Innengewindes kann einen Gewinderadius (Gewindeaußenradius) umfassen, der sich ausgehend von einer Zentralachse des Innengewindes und/oder der Befestigungssockelaufnahme orthogonal zu einem Gewindegrund bzw. einer Schmutzaufnahme (bzw. deren Scheitel) erstreckt und größer sein kann als ungefähr 4,0mm; 6,0mm; 8,0mm 10,0mm; 12,0mm; 14,0mm; 20,0mm; 25,0mm; oder 35,0mm; und/oder kleiner sein als ungefähr 5,0mm; 7,0mm; 9,0mm; 11,0mm; 13,0mm; 15,0mm; 22,5mm; 30,0mm; oder 40,0mm sein.

Der Gewinderadius ist also der Abstand zwischen der Zentralachse des Gewindes und der Gewindezahnspitze oder dem Gewindegrund (bzw. der Schmutzaufnahme), genauer gesagt, der Abstand zwischen Zentralachse des Gewindes und Scheitel Gewindezahnspitze oder Scheitel Gewindegrund (bzw. Schmutzaufnahme).

Der Befestigungssockel, die Befestigungssockelaufnahme, das das Halteteil-Gewinde und/oder das Halteeinrichtungs-Gewinde können aus Metall und/oder Kunststoff hergestellt sein.

Das Beschichtungsanlagenbauteil ist ein Absprühkörper, ein Glockenteller oder ein Ventil, z. B. ein Nadelventil, ein Spülventil, ein Absperrventil, ein Regulierungsventil oder ein Beschichtungsmittelventil,. Die Beschichtungsanlagenvorrichtung ist ein Zerstäuber (z. B. ein Rotationszerstäuber oder ein elektrostatischer Rotationszerstäuber), eine Farbwechselanordnung (Farbwechsler) oder eine Turbinen- oder Sprühkörperwelle, vorzugsweise eine hohle Glockentellerwelle. Die Gewinde können ferner besonders vorteilhaft an Zerstäubergehäusen oder Elektrodenanordnungen für die Außenaufladung vorgesehen werden.

Wie bereits erwähnt, ist das Halteteil-Gewinde vorzugsweise ein Außengewinde und das Halteeinrichtungs-Gewinde vorzugsweise ein Innengewinde. Somit kann bei einer bevorzugten Ausführungsform das Halteteil-Gewinde als Außengewinde und das Halteeinrichtungs-Gewinde als Innengewinde bezeichnet werden. Es ist jedoch auch möglich, dass das Haltteil-Gewinde ein Innengewinde und das Halteeinrichtungs-Gewinde ein Außengewinde ist.

Obige Ausführungsformen sind beliebig miteinander kombinierbar.

Weitere Ausführungsformen gemäß der Erfindung werden unter Bezugnahme auf die beiliegenden Zeichnungen erläutert.
Fig. 1 zeigt einen schematischen Axialschnitt eines Gewindezahns eines Außengewindes eines Beschichtungsanlagenbauteils positioniert an einem Innengewinde einer Beschichtungsanlagenvorrichtung gemäß einer ersten Ausführungsform;
Fig. 2 zeigt eine schematische Ansicht des Gewindezahns des Außengewindes aus Fig. 1;
Fig. 3 zeigt eine schematische Ansicht des Gewindezahns des Innengewindes aus Fig. 1;
Fig. 4 zeigt ein nicht erfindungsgemäßes Beschichtungsanlagenbauteil;
Fig. 5 zeigt ein nicht erfindungsgemäßes Gehäuse einer Beschichtungsanlagenvorrichtung;
Fig. 6 zeigt einen nicht erfindungsgemäßen Federring;
Fig. 7 zeigt das Beschichtungsanlagenbauteil gemäß Figur 4 im eingebauten Zustand;
Fig. 8 zeigt ein nicht erfindungsgemäßes Beschichtungsanlagenbauteil;
Fig. 9 zeigt ein nicht erfindungsgemäßes Gehäuse einer Beschichtungsanlagenvorrichtung;
Fig. 10 zeigt das Beschichtungsanlagenbauteil aus Fig. 8 im eingebauten Zustand;
Figuren 11A und 11B zeigen eine Draufsicht auf eine nicht erfindungsgemäße Befestigungssockelaufnahme;
Fig. 12 zeigt ein anderes nicht erfindungsgemäßes Beschichtungsanlagenbauteil;
Fig. 13 zeigt ein nicht erfindungsgemäßes Gehäuse einer Beschichtungsanlagenvorrichtung;
Fig. 14 zeigt das Beschichtungsanlagenbauteil aus Fig. 12 in eingebautem Zustand;
Fig. 15 zeigt ein anderes nicht erfindungsgemäßes Beschichtungsanlagenbauteil;
Fig. 16 zeigt ein nicht erfindungsgemäßes Gehäuse einer Beschichtungsanlagenvorrichtung;
Fig. 17 zeigt das Beschichtungsanlagenbauteil aus Fig. 15 im eingebauten Zustand;
Fig. 18 zeigt ein anderes nicht erfindungsgemäßes Beschichtungsanlagenbauteil;
Fig. 19 zeigt ein nicht erfindungsgemäßes Gehäuse einer Beschichtungsanlagenvorrichtung;
Figuren 20A bis 20D verdeutlichen eine nicht erfindungsgemäße Befestigung eines Befestigungssockels in einer Befestigungssockelaufnahme;
Fig. 21 zeigt ein anderes Beschichtungsanlagenbauteil;
Fig. 22 zeigt eine Befestigungssockelaufnahme;
Figuren 22A, 22B und 22C verdeutlichen eine Verdrehsicherung;
Fig. 23A zeigt ein anderes Beschichtungsanlagenbauteil;
Fig. 23B zeigt eine andere Befestigungssockelaufnahme;
Figuren 23C bis 23E verdeutlichen eine Verdrehsicherung;

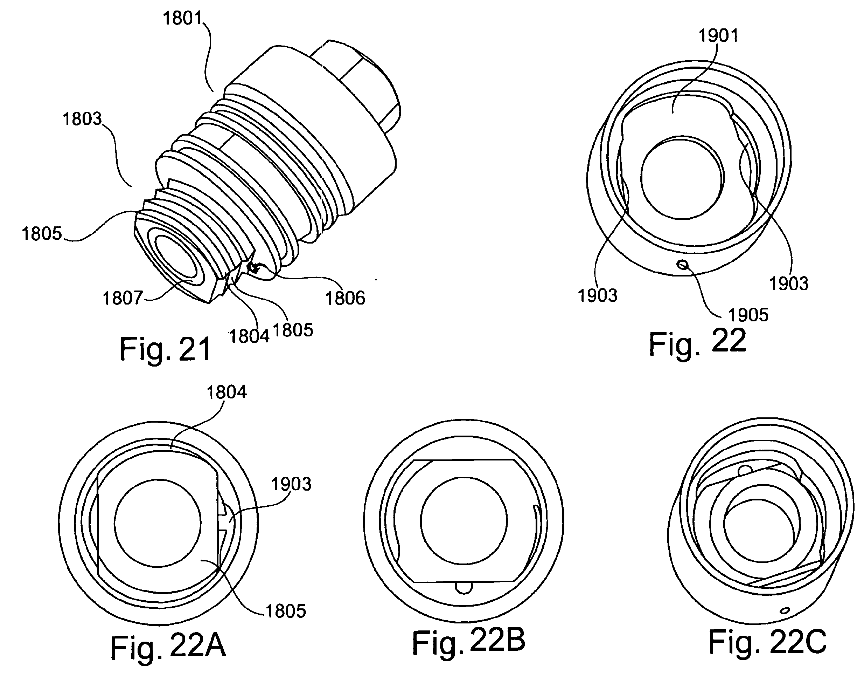

Figuren 21-23E zeigen nicht erfindungsgemäße Ausführungsformen.

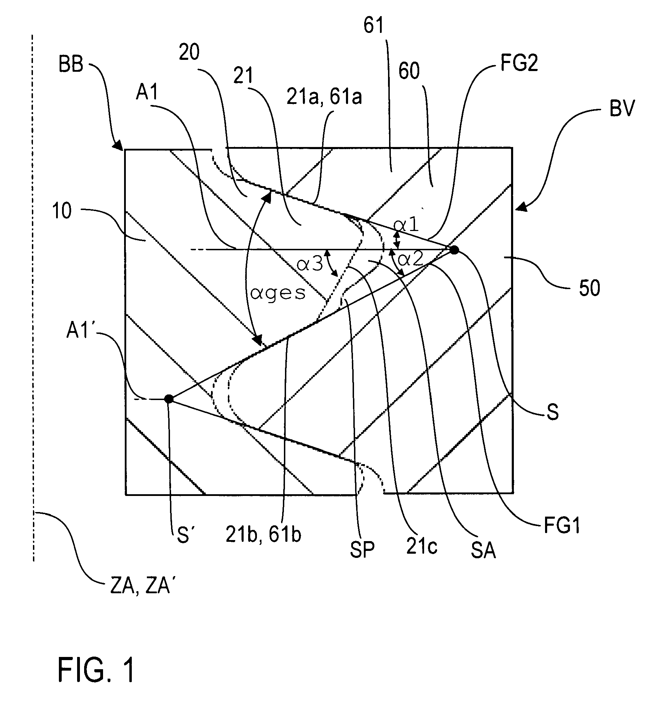

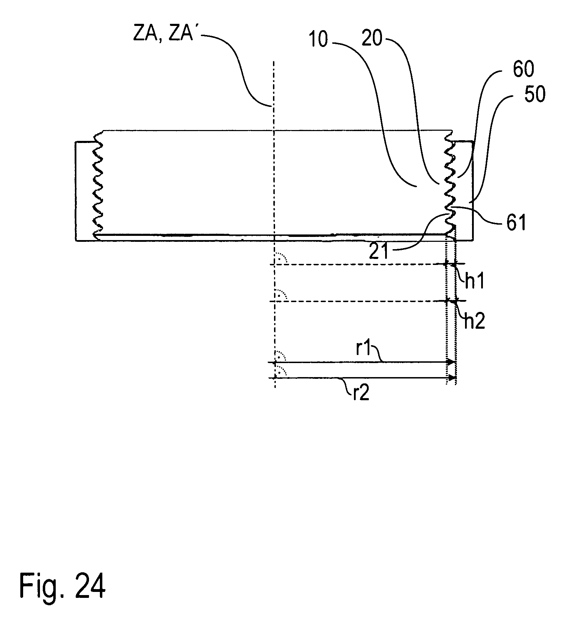

Figur 24 zeigt einen schematischen Axialschnitt des Außengewindes, positioniert an dem Innengewinde gemäß Figur 1.

Figur 1 zeigt einen schematischen Axialschnitt eines Gewindezahns (Gewindeflanke) 21 eines Halteteil-Gewindes 20 eines Beschichtungsanlagenbauteils BB positioniert an einer Beschichtungsanlagenvorrichtung BV mit einem Halteeinrichtungs-Gewinde 60 mit einem Gewindezahn (Gewindeflanke) 61. Das Halteteil-Gewinde ist ein Außengewinde und wird nachfolgend als Außengewinde 20 bezeichnet, wobei das Halteeinrichtungs-Gewinde ein Innengewinde ist und nachfolgend als Innengewinde 60 bezeichnet wird. Das Außengewinde 20 bzw. der Gewindezahn 21 sind wendel- oder schraubenartig an einem Befestigungssockel 10 vorgesehen. Das Innengewinde 60 bzw. der Gewindezahn 61 sind wendel- oder schraubenartig an einer Befestigungssockelaufnahme 50 vorgesehen. Wie aus Figur 1 ersichtlich, werden der Befestigungssockel und/oder das Außengewinde des Beschichtungsanlagenbauteils gemäß dem "Schrauben-Mutter-Prinzip" an oder in der Befestigungssockelaufnahme und/oder dem Innengewinde der Beschichtungsanlagenvorrichtung lösbar gesichert.

Das Außengewinde 20 und das Innengewinde 60, insbesondere deren wendel- oder schraubenartig verlaufenden Gewindezähne 21, 61 weisen eine Sonderkonfiguration auf, um einer oder mehreren in Lackieranlagen notwendigen Anforderungen gerecht zu werden.

Das Außengewinde 20 und/oder der Befestigungssockel 10 weisen eine in Fig. 1 schematisch dargestellte Zentralachse ZA auf (die vorzugsweise auch der Zentralachse des Beschichtungsanlagenbauteils BB entspricht). Auf ähnliche Weise weist das Innengewinde 60 und/oder die Befestigungssockelaufnahme 50 eine in Fig. 1 schematisch dargestellte Zentralachse ZA' auf (die vorzugsweise auch der Zentralachse der Beschichtungsanlagenvorrichtung BV entspricht). Wenn das Außengewinde 20 und/oder der Befestigungssockel 10 am Innengewinde 60 und/oder der Befestigungssockelaufnahme 50 lösbar gesichert ist, sind die Zentralachsen ZA, ZA' koaxial zueinander ausgerichtet.

Der Gewindezahn 21 des Außengewindes 20 umfasst einen ersten Gewindeflankenabschnitt 21a mit einem ersten Gewindeflankeninnenwinkel α1, einen zweiten Gewindeflankenabschnitt 21b mit einem zweiten Gewindeflankeninnenwinkel α2 und einen reduzierten Gewindeflankenabschnitt 21c, der Platz für ein an der Beschichtungsanlagenvorrichtung BV vorgesehenes Sperrprofil SP schafft. Ferner umfasst das Außengewinde 20 bzw. der Gewindezahn 21 eine abgerundete Gewindezahnspitze und einen abgerundeten Gewindegrund. Der erste Gewindeflankeninnenwinkel α1 und der zweite Gewindeflankeninnenwinkel α2 bilden einen Gesamtflankeninnenwinkel ages.

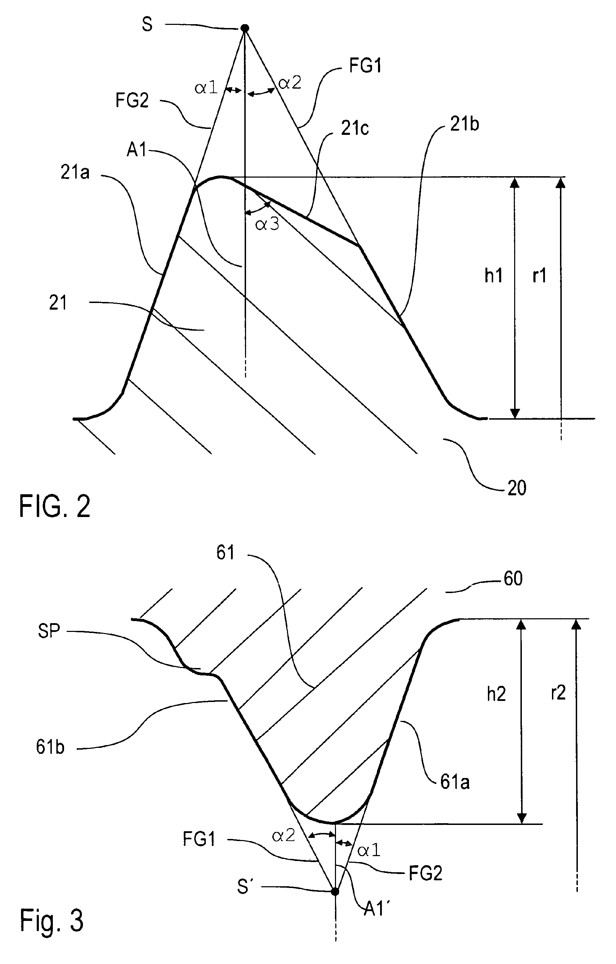

Der erste Gewindeflankenabschnitt 21a bezieht sich auf den (geradlinigen) Abschnitt zwischen Gewindegrund und Gewindeflankenspitze, wobei sich der zweite Gewindeflankenabschnitt 21b auf den (geradlinigen) Abschnitt zwischen Gewindegrund und reduziertem Gewindeflankenabschnitt 21 bezieht (siehe auch Fig. 2).

Der Gewindezahn 61 des Innengewindes 60 umfasst einen ersten Gewindeflankenabschnitt 61a, aufweisend den ersten Gewindeflankeninnenwinkel α1, einen zweiten Gewindeflankenabschnitt 61b, aufweisend den zweiten Gewindeflankeninnenwinkel α2, und das Sperrprofil SP, um ein Befestigen falscher oder inkompatibler Beschichtungsanlagenbauteile BB zu vermeiden. Ferner umfasst das Innengewinde 60 bzw. der Gewindezahn 61 eine abgerundete Gewindezahnspitze und einen abgerundeten Gewindegrund bzw. eine abgerundete Schmutzaufnahme SA.

Die Gewindezähne 21 und 61 sind jeweils mit abgerundeter Gewindezahnspitze dargestellt, können aber auch abgeflachte Gewindeflankenspitzen aufweisen.

Der reduzierte Gewindeflankenabschnitt 21c ist zwischen der Gewindezahnspitze des Gewindezahns 21 und dem zweiten Gewindeflankenabschnitt 21b angeordnet. Insbesondere zweigt der reduzierte Gewindeflankenabschnitt 21c vom zweiten Gewindeflankenabschnitt 21b ab und erstreckt sich geradlinig zur Gewindezahnspitze des Gewindezahns 21, wodurch eine seitliche, abgeschrägte Reduzierung des Gewindezahns 21 und/oder des zweiten Gewindeflankenabschnitts 21b erzielt wird. Der reduzierte Gewindeflankenabschnitt 21c weist einen dritten Gewindeflankeninnenwinkel α3 auf.

Das Sperrprofil SP ist zwischen einem Gewindegrund bzw. einer Schmutzaufnahme SA und dem zweitem Gewindeflankenabschnitt 61b angeordnet ist. Das Sperrprofil SP zweigt vom zweiten Gewindeflankenabschnitt 61b ab und erstreckt sich zum Gewindegrund bzw. zur Schmutzaufnahme SA und bildet einen Vorsprung aus, der in den Gewindegang des Innengewindes 60 hineinragt und eine Sperrung oder einen Widerstand für nicht kompatible Beschichtungsanlagenbauteile schafft. Wie in Fig. 1 zu sehen, ist der reduzierte Gewindeflankenabschnitt 21c so reduziert, dass Platz bzw. Raum für das Sperrprofil SP geschaffen wird, um das Beschichtungsanlagenbauteil BB ordnungsgemäß an der Beschichtungsanlagenvorrichtung BV befestigen zu können. Unpassende Beschichtungsanlagenbauteile BB, die inkompatibel zur Beschichtungsanlagenvorrichtung BV sind und die Beschichtungsanlagenvorrichtung BV, sich selbst oder das zu beschichtende Bauteil beschädigen könnten, können aufgrund des Sperrprofils SP nicht ordnungsgemäß eingeführt werden.

Die Gewindezähne 21, 61 sind nicht achsensymmetrisch ausgebildet. Im vorliegenden Ausführungsbeispiel sind die Gewindezähne 21, 61 in Form eines nicht gleichschenkligen Dreiecks mit beidseitig abgerundeten Gewindegrund und abgerundeter Gewindezahnspitze gezeigt. Insbesondere ist der Gewindezahn 21 nicht achsensymmetrisch bezüglich einer Bezugsgeraden A1, die sich ausgehend von der Zentralachse des Außengewindes 20 und/oder des Befestigungssockels 10 orthogonal zu einem fiktiven Schnittpunkt S erstreckt, der gebildet wird durch fiktive Verlängerungsgeraden FG1 und FG2 der ersten und zweiten Gewindeflankenabschnitte 21a, 21b bzw. 61a, 61b. Ähnlich ist der Gewindezahn 61 nicht achsensymmetrisch bezüglich einer Bezugsgeraden A1', die sich ausgehend von der Zentralachse des Innengewindes 60 und/oder der Befestigungssockelaufnahme 50 orthogonal zu einem fiktiven Schnittpunkt S' erstreckt, der gebildet wird durch fiktive Verlängerungsgeraden FG1 und FG2 der ersten und zweiten Gewindeflankenabschnitte 21a, 21b bzw. 61a, 61b.

Der erste Gewindeflankenabschnitt 21a des Außengewindes 20 bildet eine Auflagefläche zum Kontaktieren des Innengewindes 60 (bzw. des ersten Gewindeflankenabschnitts 61a des Innengewindes 60) beim Spannen (Spannfläche), wobei der zweite Gewindeflankenabschnitt 21b des Außengewindes 20 eine Auflagefläche zum Kontaktieren des Innengewindes 60 (bzw. des zweiten Gewindeflankenabschnitts 61b des Innengewindes 60) beim Lösen bildet (Lösefläche). Wie in Figur 1 zu sehen, wird die Spannfläche im Wesentlichen durch den (geradlinigen) Abschnitt zwischen Gewindegrund und Gewindeflankenspitze bestimmt, wobei die Lösefläche im Wesentlichen durch den (geradlinigen) Abschnitt zwischen Gewindegrund und reduziertem Gewindeflankenabschnitt bestimmt wird. Vorzugsweise liegt das Verhältnis Spannfläche zu Lösefläche bei zwischen ungefähr 0,5 bis 6, beispielsweise bei zwischen ungefähr 0,75 bis 1,75. Insbesondere entspricht das Verhältnis Spannfläche zu Lösefläche im Wesentlichen dem Verhältnis der Fläche, die vom ersten Gewindeflankenabschnitt 21a gebildet wird, zu der Fläche, die vom zweiten Gewindeflankenabschnitt 21b gebildet wird. Ähnlich liegt auch das Verhältnis erster Gewindeflankenabschnitt 21a zu zweitem Gewindeflankenabschnitt 21b bei zwischen ungefähr 0,5 bis 6, vorzugsweise bei zwischen ungefähr 0,75 bis 1,75.

Die Gewindeflankeninnenwinkel α1, α2 und α3 werden zu der vorstehend erwähnten Bezugsgeraden A1 bzw. A1' gemessen. Bei den Gewindeflankeninnenwinkeln α1, α2 und α3 handelt es sich um spitze Winkel, die "nach innen" gemessen werden und somit kleiner sind als 90°.

Figur 2 zeigt eine Detailansicht des Gewindezahns 21 des Außengewindes 20 aus Figur 1. Insbesondere sind der erste Gewindeflankenabschnitt 21a, der zweite Gewindeflankenabschnitt 21b und der reduzierte Gewindeflankenabschnitt 21c zu sehen sowie die Gewindeflankeninnenwinkel α1, α2 und α3, die zu der Bezugsgeraden A1 zwischen Schnittpunkt S und Zentralachse des Außengewindes 20 gemessen werden.

Der Gewindezahn 21 hat eine Gewindezahntiefe h1 und einen zugehörigen Gewinderadius (Gewindeaußenradius) r1. Der zugehörige Gewinderadius r1 des Gewindezahns 21 erstreckt sich ausgehend von der Zentralachse des Außengewindes 20 orthogonal zu der Gewindezahnspitze des Gewindezahns 21 (bzw. deren Scheitel), wobei sich die Gewindezahntiefe h1 von einem benachbarten Gewindegrund des Gewindezahns 21 (bzw. dessen Scheitel) zur Gewindezahnspitze des Gewindezahns 21 (bzw. deren Scheitel) erstreckt (in Radialrichtung bzw. orthogonal zu der Zentralachse des Außengewindes 20).

Figur 3 zeigt eine Detailansicht des Gewindezahns 61 des Innengewindes 60 aus Figur 1. Insbesondere sind der erste Gewindeflankenabschnitt 61a, der zweite Gewindeflankenabschnitt 61b und das Sperrprofil SP zu sehen sowie die Gewindeflankeninnenwinkel α1 und α2, die zu der Bezugsgeraden A1' zwischen Schnittpunkt S' und Zentralachse des Innengewindes 60 gemessen werden.

Der Gewindezahn 61 hat eine Gewindezahntiefe h2 und einen zugehörigen Gewinderadius (Gewindeaußenradius) r2. Der zugehörige Gewinderadius r2 des Gewindezahns 61 erstreckt sich ausgehend von der Zentralachse des Innengewindes 60 orthogonal zum Gewindegrund bzw. der Schmutzaufnahme (bzw. deren Scheitel), wobei sich die Gewindezahntiefe h2 von einem Gewindegrund bzw. einer Schmutzaufnahme (bzw. dessen Scheitel) zur Gewindezahnspitze des Gewindezahns 61 (bzw. deren Scheitel) erstreckt (in Radialrichtung bzw. orthogonal zu der Zentralachse des Innengewindes 60).

Bei einer anderen Ausführungsform kann das Halteeinrichtungs-Gewinde als Außengewinde und das Halteteil-Gewinde als Innengewinde ausgeführt werden.

Im Folgenden werden Beschichtungsmittelventile beispielhaft für Beschichtungsanlagenbauteile beschrieben. Die nachstehenden Ausführungen gelten jedoch sinngemäß für beliebige Ventile oder Beschichtungsanlagenbauteile, welche zur Beschichtung von Werkstücken eingesetzt werden können.

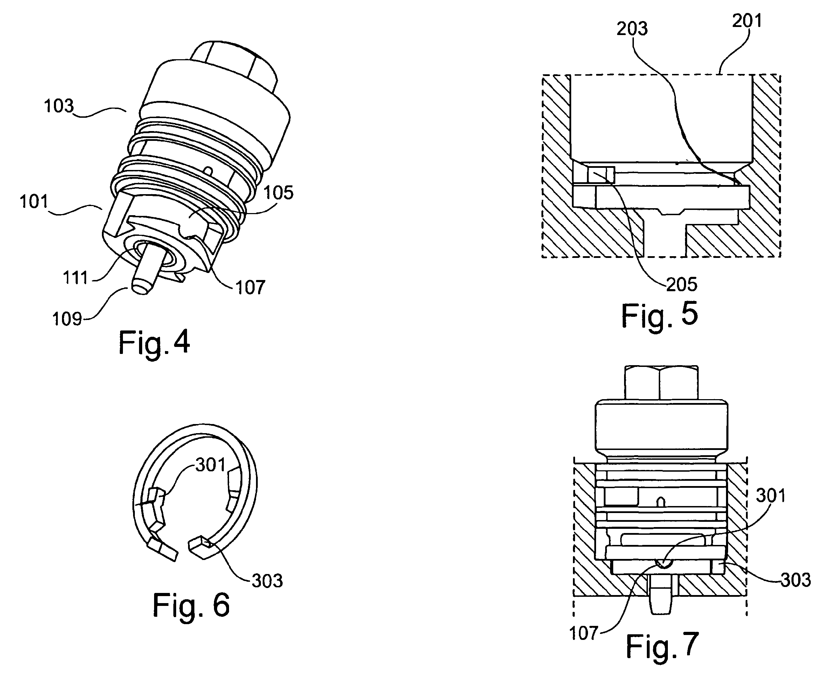

Figur 4 zeigt eine Beschichtungsmittelvorrichtung bzw. ein Beschichtungsanlagenbauteil, welche ein Ventil sein kann und zur Beeinflussung einer Ausgabe eines Beschichtungsmittels vorgesehen ist. Die Beschichtungsmittelvorrichtung umfasst einen steckbaren Befestigungssockel 101 zur steckbaren Halterung der Beschichtungsmittelvorrichtung. Der steckbare Befestigungssockel 101 ist beispielsweise mit einem Gehäuse 103 der Beschichtungsmittelvorrichtung verbunden.

Der steckbare Befestigungssockel ist mit einer Wendelnut 105 versehen, welche eine optionale Fixiernut 107 zur Aufnahme einer Fixiernase aufweist. Die Beschichtungsmittelvorrichtung umfasst ferner ausgangsseitig eine Ventilnadel 109, welche von dem steckbaren Befestigungssockel 101 zumindest teilweise umgeben ist, wobei eine Stirnseite des Befestigungssockels 101 mit einer Nut 111 für einen Dichtungsring versehen sein kann.

Figur 5 zeigt ein Gehäuse einer korrespondierenden Beschichtungsvorrichtung bzw. Beschichtungsanlagenvorrichtung, das eine Befestigungssockelaufnahme bzw. Aufnahmebuchse 201 zur Aufnahme des steckbaren Befestigungssockels 101 der Beschichtungsmittelvorrichtung aus Fig. 4 aufweist. In der Aufnahmebuchse 201 ist deshalb eine Nut 203 gebildet, welche einen Federring 205 aufweisen kann. Der Federring 205 ist zur Aufnahme der in Fig. 4 dargestellten Wendelnut 105 vorgesehen.

Figur 6 zeigt einen Federring, der ein elastisches Element ist und beispielsweise zumindest abschnittsweise kreisförmig gebogen ist und dem Federring 205 entsprechen kann. Der Federring umfasst auf seiner Innenseite zumindest eine oder zwei fehlende Fixiernasen 301, welche in die Fixiernut 107 aus Fig. 4 eingreifen, sowie eine Verdrehsicherung mit einem Montage- bzw. Haltezapfen 303.

In Figur 7 ist eine Verbindung der Beschichtungsmittelvorrichtung aus Fig. 4 mit der Beschichtungsvorrichtung aus Fig. 5 dargestellt. Wie in Fig. 7 gezeigt, greifen die federnden Fixiernasen 301 des Federrings 205 in die Fixiernuten 107 ein.

Die in Figur 4 dargestellte Beschichtungsmittelvorrichtung kann eine oder zwei Wendelnuten 107 aufweisen. Der Federring 205 mit den Haltezapfen 303 und den integrierten Fixiernasen 301 wird in die Nut 203 in der Aufnahmebuchse aus Fig. 5 eingesetzt, wobei die Haltezapfen 303 beim Einbau in die Wendelnut eingreifen. Hierbei wird der steckbare Befestigungssockel 101 in die Buchse 201 eingeführt und um beispielsweise 65° zwecks Verdrehsicherung verdreht. Zum Ausbau der Beschichtungsmittelvorrichtung wird diese zurückgedreht und herausgezogen. Dadurch ist es möglich, direkte Befestigungselemente zu verwenden. Ferner können große Auflageflächen zwischen dem Federring 205 und dem Gehäuse realisiert werden. Der Federring 205 kann ferner einfach ausgetauscht werden. Darüber hinaus ist eine Kontur des in Fig. 5 dargestellten Gehäuses der Beschichtungsvorrichtung einfach.

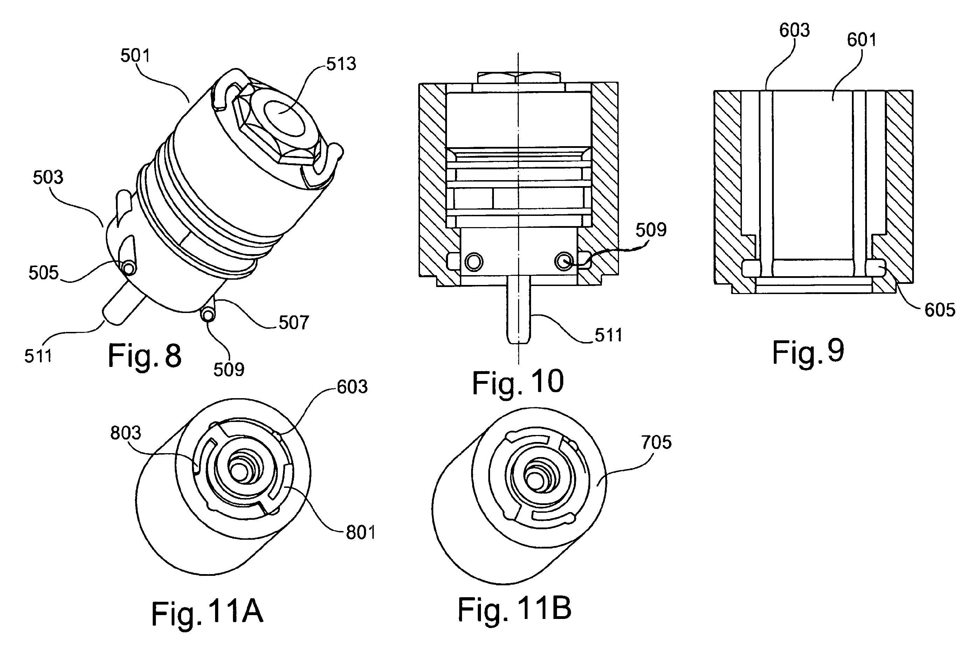

Figur 8 zeigt eine Beschichtungsmittelvorrichtung bzw. ein Beschichtungsanlagenbauteil, beispielsweise ein Beschichtungsmittelventil, mit einem Gehäuse 501 und einem steckbaren Befestigungssockel 503. In dem steckbaren Befestigungssockel 503, beispielsweise in einem Ventilsockel, sind zwei Haltestifte 505 und 507 quer in einer Querschnittsebene des Befestigungssockels eingebettet. Die Haltestifte 505 und 507 weisen nach außen geführte Enden 509 auf, durch welche Halteteile (Halteelemente) gebildet werden. Die Beschichtungsmittelvorrichtung umfasst ferner eine Ventilnadel 511, welche ausgabeseitig angeordnet ist. Eingangsseitig ist ein Steuereingang 513 zum Ansteuern der Ventilnadel 511 mit beispielsweise Druckluft vorgesehen.

Figur 9 zeigt ein Gehäuse einer Beschichtungsvorrichtung bzw. Beschichtungsanlagenvorrichtung, beispielsweise eines Luftzerstäubers oder eines Farbduplexers, mit einer Befestigungssockelaufnahme bzw. Aufnahmebuchse 601 zur Aufnahme des steckbaren Befestigungssockels 503 aus Fig. 8. Die Aufnahmebuchse 601 umfasst axiale Ausnehmungen 603, in welchen die Halteelemente 509 geführt werden können. Ferner ist eine beispielsweise umlaufende Ausnehmung 605 zur Verdrehsicherung vorgesehen.

Figur 10 zeigt die Beschichtungsmittelvorrichtung aus Fig. 8 im eingebauten Zustand.

Figuren 11A und 11B zeigen eine Draufsicht auf die Aufnahmebuchse 601 mit den axialen Ausnehmungen 603, welche beispielsweise durch axiale Nuten gebildet sein können. In der Aufnahmebuchse ist ferner ein Federring 801 mit abgewinkelten Armen, welche mit Haltewülsten 803 versehen sind, angeordnet. Die Haltewülste 803 rasten zur Verdrehsicherung in die axiale Ausnehmung 603 ein, wie es in Fig. 11B dargestellt ist. Zum Einbau der Beschichtungsmittelvorrichtung aus Fig. 8 wird deren Befestigungssockel 503 in die Aufnahmebuchse 601 eingesteckt und beispielsweise um 90° verdreht, bis die Verdrehsicherung einrastet. Diese rastet bei Zurückdrehen der Beschichtungsmittelvorrichtung automatisch aus, so dass die Beschichtungsmittelvorrichtung nach einer 90°-Drehung wieder herausgezogen werden kann. Vorteilhaft ist dabei ferner die Möglichkeit einer optischen Kontrolle der Ventillage durch das Einrasten der Verdrehsicherung.

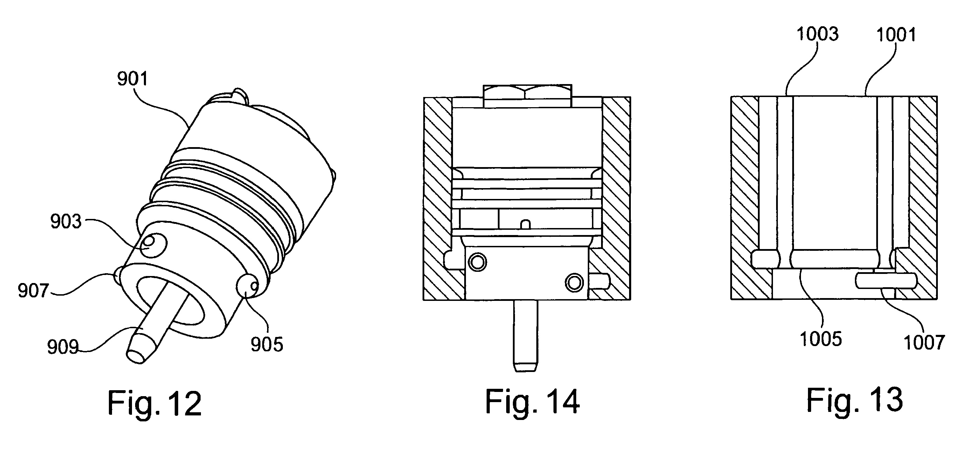

Figur 12 zeigt eine Beschichtungsmittelvorrichtung bzw. ein Beschichtungsanlagenbauteil mit einem Gehäuse 901 und einem steckbaren Befestigungssockel 903, in welchem in unterschiedlichen Querschnittsebenen zwei Haltestifte 905 und 907, welche beispielsweise als Normstifte ausgeführt sind, angeordnet sind. Die Beschichtungsmittelvorrichtung umfasst ferner ausgabeseitig eine Ventilnadel 909.

Die Haltestifte 905 und 907 weisen Endabschnitte auf, welche als Halteelemente nach außen geführt sind.

Figur 13 zeigt ein Gehäuse einer Beschichtungsvorrichtung bzw. Beschichtungsanlagenvorrichtung mit einer Befestigungssockelaufnahme bzw. Aufnahmebuchse 1001, in welcher vier axiale Ausnehmungen 1003, beispielsweise axiale Nuten, angeordnet sind. Ferner sind zwei umlaufende Nuten 1005 und 1007 mit beispielsweise einem radialen Anschlag bei einem Winkel von etwa 270° eingefräst.

Figur 14 zeigt die Beschichtungsmittelvorrichtung aus Fig. 12 in eingebautem Zustand. Hierzu wird der steckbare Befestigungssockel 903 in die Buchse 1001 eingeführt und beispielsweise um 90° bis zum Anschlag verdreht, wodurch die Verdrehsicherung einrastet. Zum Ausbau der Beschichtungsmittelvorrichtung rastet die Verdrehsicherung beim Zurückdrehen der Beschichtungsmittelvorrichtung um 90° aus, so dass die Beschichtungsmittelvorrichtung herausgezogen werden kann. Vorteilhaft ist dabei insbesondere, dass der Verdrehsicherungsanschlag definiert ist und dass eine optische Kontrolle der Ventillage durch das Einrasten der Verdrehsicherung realisiert werden kann.

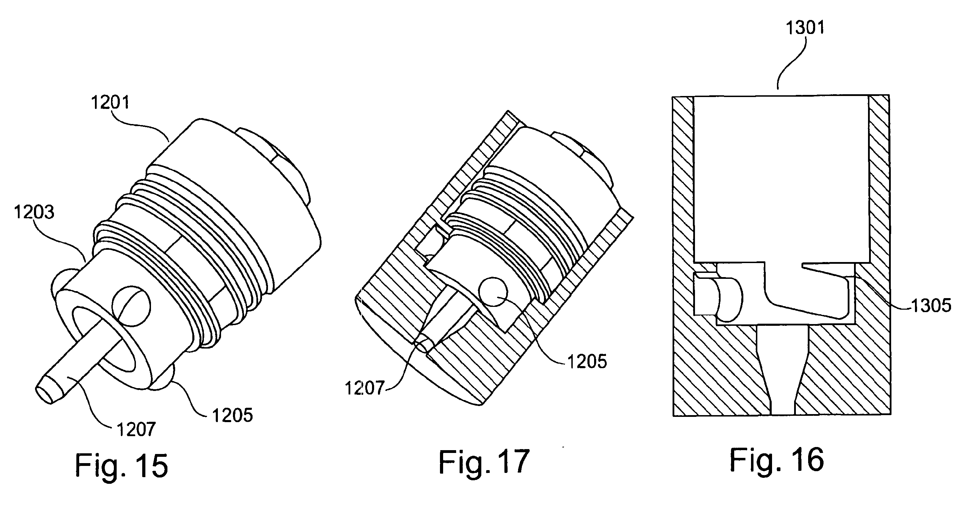

Figur 15 zeigt eine Beschichtungsmittelvorrichtung bzw. ein Beschichtungsanlagenbauteil, beispielsweise ein Beschichtungsmittelventil mit einem Gehäuse 1201 und einem steckbaren Befestigungssockel 1203, dessen Wandung mit beispielsweise drei Kugelbolzen 1205, welche genormt sein können, quer in einer Querschnittsebene versehen ist. Die Kugelbolzen 1205 können in dem Befestigungssockel 1203 zumindest teilweise eingebettet sein, so dass deren hervorstehende Abschnitte Halteelemente zur Verdrehsicherung formen können.

Figur 16 zeigt ein Gehäuse einer Beschichtungsvorrichtung bzw. Beschichtungsanlagenvorrichtung mit einer Befestigungssockelaufnahme bzw. Aufnahmebuchse 1301 zur Aufnahme des Befestigungssockels 1203 aus Fig. 15. Die Aufnahmebuchse 1301 ist mit einer Mehrzahl von, beispielsweise mit drei, Wendelnuten 1305 versehen, deren Steigung jeweils 10% und deren Hub 1mm betragen kann. Die Wendelnuten 1305 sind beispielsweise eingefräst. Die Kugelbolzen 1205 können ferner auch als Stifte ausgeführt sein. Ferner können sie als Zapfen direkt aus dem Ventilgehäuse herausgefräst werden. Die Wendelnuten 1305 haben den Vorteil, dass sie bei einer einfachen Gehäusekontur eine hohe Spannkraft ermöglichen, welche für eine sichere Verbindung sorgt.

Figur 17 zeigt die Beschichtungsmittelvorrichtung aus Fig. 15 im eingebauten Zustand. Hierzu wird deren Befestigungssockel 1203 in die Aufnahmebuchse 1301 eingesteckt und beispielsweise um 60° bis zum Anschlag verdreht. Die Verdrehsicherung wird dabei über eine Spannung einer Nadeldichtung im Reibschluss bewirkt. Zum Ausbau der Beschichtungsmittelvorrichtung wird diese zurückgedreht und herausgezogen.

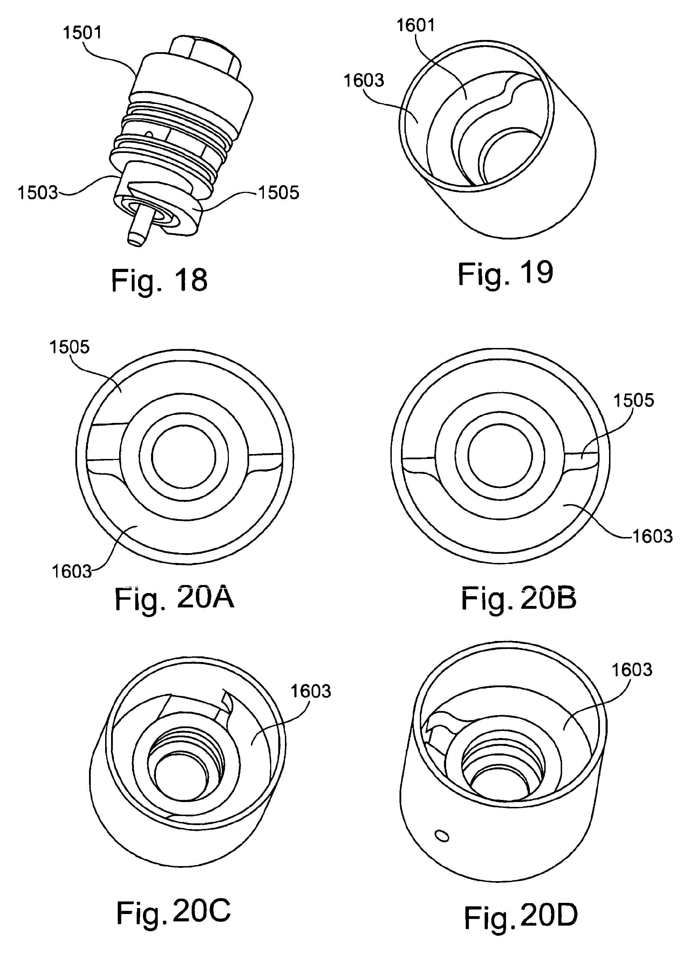

Figur 18 zeigt eine Beschichtungsmittelvorrichtung bzw. ein Beschichtungsanlagenbauteil, beispielsweise ein Ventil, mit einem Ventilgehäuse 1501 und einem steckbaren Befestigungssockel 1503, welcher mit einem Zapfensegment 1505, der mit einer Spannschräge von 1,5mm und 20° um beispielsweise 180° angefräst sein kann. Das Zapfensegment erstreckt sich somit über ungefähr 180° an der Außenfläche des Befestigungssockels 1503.

Figur 19 zeigt ein Gehäuse einer Beschichtungsvorrichtung bzw. Beschichtungsanlagenvorrichtung mit einer Befestigungssockelaufnahme bzw. Aufnahmebuchse 1601 zur Aufnahme des Befestigungssockels 1503 aus Fig. 18. Die Aufnahmebuchse 1601 ist mit einer Halteleiste 1603 versehen, welche sich beispielsweise um 160° erstreckt.

In den Figuren 20A bis 20D ist die Befestigung des in Fig. 18 dargestellten Befestigungssockels 1503 in der Aufnahmebuchse 1601 dargestellt. Fig. 20A zeigt dabei den Befestigungssockel 1503 im eingesteckten, jedoch noch nicht im verdrehten Zustand. Figuren 20B bis 20D zeigen die Befestigung im verdrehgesicherten Zustand.

Figur 21 zeigt eine Beschichtungsmittelvorrichtung bzw. ein Beschichtungsanlagenbauteil, beispielsweise ein Ventil, mit einem Ventilgehäuse 1801 und einem steckbaren Befestigungssockel 1803, welcher teilweise mit einem Gewinde 1804, welches axial abgeflachte Abschnitte 1805 aufweist, umfasst. Die abgeflachten Abschnitte 1805 können symmetrische Abfräsungen sein, wodurch der Befestigungssockel nach dem "Schlüssel-Loch"-Prinzip in eine Aufnahmebuchse eingeführt und in dieser zur Verdrehsicherung verdreht werden kann. Der Befestigungssockel 1803 ist ferner mit einem optionalen Positionierstift 1806 zur Positionierung bei dessen Einführung in eine Aufnahmebuchse versehen. Es ist möglich, nur einen axial abgeflachten Abschnitt 1805 vorzusehen.

Figur 22 zeigt ein Gehäuse einer Beschichtungsvorrichtung bzw. Beschichtungsanlagenvorrichtung mit einer Befestigungssockelaufnahme bzw. Aufnahmebuchse 1901 zur Aufnahme des Befestigungssockels 1803. Die Aufnahmebuchse 1901 ist beispielsweise länglich ausgeführt und umfasst seitliche Gewindesegmente 1903 zur Aufnahme der Gewindeabschnitte des Befestigungssockels. Die Aufnahmebuchse ist ferner optional mit einer Leckagebohrung 1905 versehen. Die in Fig. 22 dargestellte Aufnahmebuchse 1901 hat symmetrisch angeordnete Gewindeausnehmungen zur Aufnahme des Gewindes 1804. Diese können jedoch auch asymmetrisch angeordnet sein.

Figuren 22A, 22B und 22C zeigen eine Verdrehsicherung des Befestigungssockels 1803 in der Aufnahmebuchse 1901. Fig. 22B und 22C zeigen den verdrehgesicherten Zustand.

Das Gewinde 1804 des Befestigungssockels kann ein M14x1,5 Gewinde sein, welches an zwei Seiten beispielsweise symmetrisch oder unsymmetrisch abgefräst ist. Korrespondierend hierzu ist die Aufnahmebuchse 1901 an zwei Seiten ausgespart. Der radiale Stift 1806 kann beispielsweise zur eindeutigen Positionierung dienen, wobei stirnseitig ein Dichtungsring in einer Nut 1807 zur Abdichtung der Leckage vorgesehen sein kann. Zum Einbau wird der Befestigungssockel 1803 in die Aufnahmebuchse eingesteckt und beispielsweise um ca. 90° bis 110° verdreht. Die Verdrehsicherung wird dabei über eine reibschlüssige Spannung einer Nadeldichtung realisiert. Zum Ausbau der Beschichtungsmittelvorrichtung wird diese zurückgedreht und herausgezogen.

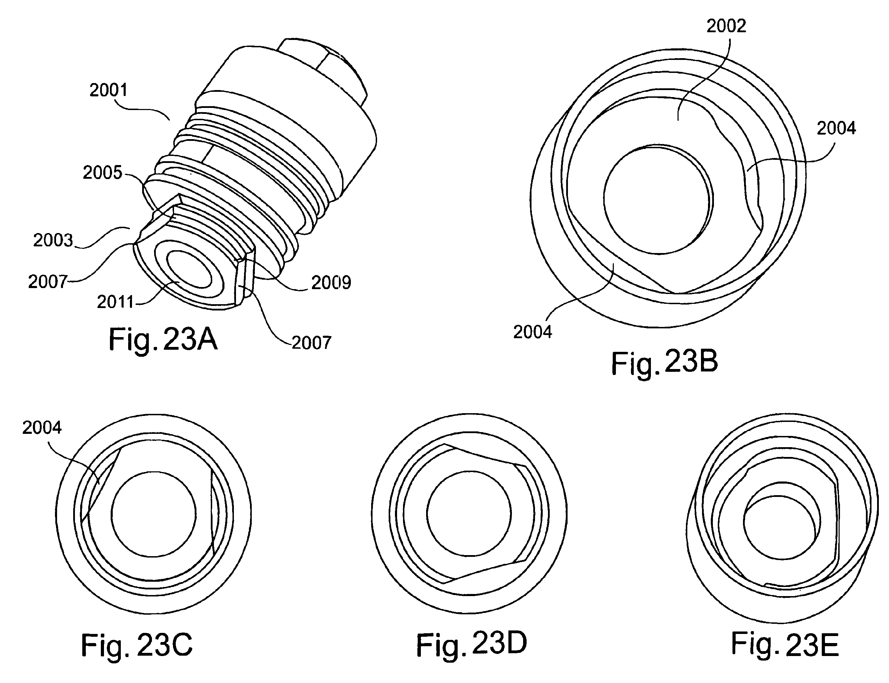

Figur 23A zeigt eine Beschichtungsmittelvorrichtung bzw. ein Beschichtungsanlagenbauteil, beispielsweise ein Ventil, mit einem Gehäuse 2001 und einem steckbaren Befestigungssockel 2003, das asymmetrisch angeordnete und sich axial ausdehnende Gewindeabschnitte 2005 aufweist, welche durch asymmetrische, axiale Abfräsungen 2007 beabstandet sind. Der Befestigungssockel 2003 umfasst ferner eine Leckagebohrung 2009 sowie eine Nut 2011 für einen Dichtungsring. Nicht dargestellt ist eine Ventilnadel, welche in einem Zylinder des Befestigungssockels 2103 angeordnet sein kann.

Fig. 23B zeigt eine Kontur eines Gehäuses einer korrespondierenden Beschichtungsvorrichtung bzw. Beschichtungsanlagenvorrichtung, beispielsweise eines Zerstäubers oder eines Farbwechslers, mit einer asymmetrisch geformten Aufnahmebuchse 2002, welche asymmetrisch angeordnete Gewindesegmente 2004 aufweist.

In den Figuren 23C bis 23E ist die Beschichtungsmittelvorrichtung aus Fig. 23A im eingebauten Zustand dargestellt. Dabei zeigt die Fig. 23C einen eingesteckten Zustand, wobei die Figuren 23D bis 23E die Verdrehsicherung verdeutlichen.

Das Gewinde 2005 kann beispielsweise an zwei Seiten asymmetrisch um 30° abgefräst sein, wobei, korrespondierend hierzu, in der Aufnahmebuchse 2002 das gleiche Gewinde eingebracht und danach an zwei Seiten ausgespart werden kann. Die eindeutige Positionierung des Befestigungssockels 2003 in der Aufnahmebuchse 2002 kann über die asymmetrischen Flächen nach dem "Schlüssel-Loch"-Prinzip realisiert werden. Die Verdrehsicherung wird dabei über eine reibschlüssige Spannung einer Nadeldichtung realisiert. Zum Einbau der Beschichtungsmittelvorrichtung wird diese beispielsweise um ca. 75° verdreht und dadurch verdrehgesichert. Zum Ausbauen der Beschichtungsmittelvorrichtung wird diese zurückgedreht und herausgezogen. Vorteilhaft dabei ist insbesondere, dass die Positionierung optisch über eine Keilform sichtbar gemacht werden kann und dass kein Positionierstift notwendig ist.

Figur 24 zeigt insbesondere einen schematischen Axialschnitt des Außengewindes 20 mit dem Gewindezahn 21, positioniert bzw. angeschraubt an dem Innengewinde 60 mit dem Gewindezahn 61 gemäß Figur 1. Das Außengewinde 20 ist an dem Befestigungssockel 10 vorgesehen, wohingegen das Innengewinde 60 an der Befestigungssockelaufnahme 50 vorgesehen ist. Wie in Figur 1 kennzeichnet Bezugszeichen ZA die Zentralachse (Gewindeachse) des Außengewindes 20 bzw. des Befestigungssockels 10, wobei Bezugszeichen ZA' die koaxial angeordnete Zentralachse (Gewindeachse) des Innengewindes 60 bzw. der Befestigungssockelaufnahme 50 kennzeichnet.

Ferner kann in Figur 24 die Gewindezahntiefe h1 und der Gewinderadius r1 des Gewindezahns 21 bzw. des Außengewindes 20 gesehen werden. Der Gewinderadius r1 erstreckt sich ausgehend von der Zentralachse ZA orthogonal zu der Gewindezahnspitze des Gewindezahns 21, wobei sich die Gewindezahntiefe h1 von dem Gewindegrund des Gewindezahns 21 bzw. des Außengewindes 20 zur Gewindezahnspitze des Gewindezahns 21 (bzw. deren Scheitel) erstreckt (gemessen in Radialrichtung bzw. orthogonal zu der Zentralachse ZA).

Auch kann in Figur 24 die Gewindezahntiefe h2 und der Gewinderadius r2 des Gewindezahns 61 bzw. des Innengewindes 60 gesehen werden. Der Gewinderadius r2 erstreckt sich ausgehend von der Zentralachse ZA' orthogonal zum Gewindegrund (bzw. der Schmutzaufnahme) des Gewindezahns 61 bzw. des Innengewindes 60, wobei sich die Gewindezahntiefe h2 von dem Gewindegrund (bzw. einer Schmutzaufnahme) des Gewindezahns 61 bzw. des Innengewindes 60 zur Gewindezahnspitze des Gewindezahns 61 erstreckt (gemessen in Radialrichtung bzw. orthogonal zu der Zentralachse ZA').

Der Befestigungssockel 10, das Außengewinde 20 und der Gewindezahn 21 sind an dem Beschichtungsanlagenbauteil BB (nur ein Abschnitt des Beschichtungsanlagenbauteils BB ist in den Figuren 1 und 24 zu sehen) bereitgestellt, wobei die Befestigungssockelaufnahme 50, das Innengewinde 60 und der Gewindezahn 61 an der Beschichtungsanlagenvorrichtung BV (nur ein Abschnitt der Beschichtungsanlagenvorrichtung BV ist in den Figuren 1 und 24 zu sehen) bereitgestellt ist. Bevorzugt ist das Beschichtungsanlagenbauteil BB ein Ventil oder ein Glockenteller, wobei die Beschichtungsanlagenvorrichtung BV bevorzugt ein Farbwechsler, eine vorzugsweise hohle Glockentellerwelle oder allgemein ein Zerstäuber bzw. ein Zerstäuberbauteil ist.

Die in den Figuren dargestellten Beschichtungsmittelvorrichtungen bzw. Beschichtungsanlagenbauteile können beispielsweise selbsthemmend und/oder über einen Formschluss oder über einen Reibschluss verdrehgesichert werden. Ferner können die Merkmale der vorstehenden Beschichtungsmittelvorrichtungen einzeln oder gruppenweise miteinander kombiniert werden, wodurch weitere vorteilhafte Ausführungsformen realisiert werden können.

Die Erfindung ist nicht auf die vorstehend beschriebenen bevorzugten Ausführungsbeispiele beschränkt. Vielmehr ist eine Vielzahl von Varianten und Abwandlungen möglich.

## Patentansprüche

1. Beschichtungsanlagenbauteil, nämlich Ventil, Absprühkörper oder Glockenteller, mit zumindest einem Halteteil zum lösbaren Verbinden mit einer Beschichtungsanlagenvorrichtung, wobei das Halteteil ein Gewinde (20) mit Sonderkonfiguration ist, nämlich **gekennzeichnet durch**
- einen ersten Gewindeflankenabschnitt (21a) mit einem ersten Gewindeflankeninnenwinkel (α1) und einen zweiten Gewindeflankenabschnitt (21b) mit einem zweiten Gewindeflankeninnenwinkel (α2), und
- einen reduzierten Gewindeflankenabschnitt (21c), wobei der reduzierte Gewindeflankenabschnitt (21c) von dem zweiten Gewindeflankenabschnitt (21b) abzweigt, sich zur Gewindezahnspitze erstreckt und Raum für ein Sperrprofil (SP) an der Beschichtungsanlagenvorrichtung schafft,
- wobei der erste Gewindeflankeninnenwinkel (α1) kleiner ist als der zweite Gewindeflankeninnenwinkel (α2),
- wobei der erste Gewindeflankeninnenwinkel (α1) größer ist als 17,5°, und
- wobei der erste Gewindeflankeninnenwinkel (α1) und der zweite Gewindeflankeninnenwinkel (α2) relativ zu einer Bezugsgeraden gemessen werden, die sich ausgehend von einer Zentralachse des Halteteil-Gewindes orthogonal zum zugehörigen Gewindezahn erstreckt.

2. Beschichtungsanlagenbauteil gemäß Anspruch 1, **dadurch gekennzeichnet, dass** das Halteteil-Gewinde eine Steigung und einen Gewindezahn (21) mit einer Gewindezahntiefe (h1) aufweist und das Verhältnis Gewindezahntiefe (h1) zu Steigung
a) größer ist als ungefähr 0,3; und
b) kleiner ist als ungefähr 1,0.

3. Beschichtungsanlagenbauteil gemäß einem der Ansprüche 1-2, **dadurch gekennzeichnet, dass**
a) das Halteteil-Gewinde zumindest einen Gewindezahn (21) umfasst; und
b) zumindest die Basis des Gewindezahns (21) im Wesentlichen in Form eines nicht gleichschenkligen Dreiecks ausgebildet ist; oder
c) zumindest die Basis des Gewindezahns (21) im Wesentlichen in Form eines nicht gleichschenkligen Trapezes ausgebildet ist.

4. Beschichtungsanlagenbauteil gemäß einem der Ansprüche 1 bis 3, **dadurch gekennzeichnet, dass**
a) der reduzierte Gewindeflankenabschnitt (21c) seitlich reduziert ist und abgeschrägt zwischen Gewindezahnspitze und zweitem Gewindeflankenabschnitt (21b) positioniert ist;
und/oder
b) der reduzierte Gewindeflankenabschnitt (21c) einen dritten Gewindeflankeninnenwinkel (α3) umfasst und der dritte Gewindeflankeninnenwinkel (α3) größer ist als ungefähr 47,5°.

5. Beschichtungsanlagenbauteil gemäß einem der Ansprüche 1-4, **dadurch gekennzeichnet, dass**
a) der erste Gewindeflankeninnenwinkel (α1) kleiner ist als ungefähr 32,5°;
b) der zweite Gewindeflankeninnenwinkel (α2) größer ist als ungefähr 27,5°; und
c) der zweite Gewindeflankeninnenwinkel (α2) kleiner ist als ungefähr 42,5°.

6. Beschichtungsanlagenbauteil gemäß einem der Ansprüche 1-5, **dadurch gekennzeichnet, dass**
a) der erste Gewindeflankenabschnitt (21a) eine Auflagefläche zum Kontaktieren eines Gewindes der Beschichtungsanlagenvorrichtung beim Spannen bildet, und der zweite Gewindeflankenabschnitt (21b) eine Auflagefläche zum Kontaktieren eines Gewindes der Beschichtungsanlagenvorrichtung beim Lösen bildet, wobei das Verhältnis Spannfläche zu Lösefläche; oder
b) das Verhältnis der Fläche, die vom ersten Gewindeflankenabschnitt (21a) gebildet wird, zu der Fläche, die vom zweiten Gewindeflankenabschnitt (21b) gebildet wird
c) größer ist als ungefähr 0,5; und
d) kleiner ist als ungefähr 6,0.

7. Beschichtungsanlagenbauteil gemäß einem der Ansprüche 1-6, **dadurch gekennzeichnet, dass** das Halteteil-Gewinde
a) eine Steigung von größer als ungefähr 0,5mm aufweist; und
b) eine Steigung von kleiner als ungefähr 4,0mm aufweist.

8. Beschichtungsanlagenbauteil gemäß einem der Ansprüche 1-7, **dadurch gekennzeichnet, dass** das Halteteil-Gewinde einen Gewindezahn (21) mit einer Gewindezahntiefe (h1) aufweist, die
a) größer ist als ungefähr 0,2mm; und
b) kleiner ist als ungefähr 1,6mm.

9. Beschichtungsanlagenbauteil gemäß einem der Ansprüche 1-8, **dadurch gekennzeichnet, dass** das Halteteil-Gewinde a) ein Außengewinde ist und einen Gewindeaußenradius (r1) aufweist, der
b) größer ist als ungefähr 4,0mm;
c) und kleiner ist als ungefähr 22,5mm.

10. Beschichtungsanlagenbauteil gemäß einem der Ansprüche 1-9, **dadurch gekennzeichnet, dass**
a) das Halteteil-Gewinde eingängig ist; oder
b) das Halteteil-Gewinde mehrgängig ist.

11. Beschichtungsanlagenbauteil gemäß einem der Ansprüche 1-10, **dadurch gekennzeichnet, dass**
a) das Halteteil-Gewinde zumindest einen abgerundeten Gewindegrund umfasst; und
b) der Gewindezahn (21) eine abgerundete Gewindezahnspitze aufweist.

12. Beschichtungsanlagenvorrichtung, nämlich Zerstäuber, Farbwechselanordnung oder Sprühkörperwelle, mit zumindest einer Halteeinrichtung zum lösbaren Verbinden mit einem Beschichtungsanlagenbauteil gemäß einem der Ansprüche 1-11, wobei die Halteeinrichtung ein Gewinde ist, **gekennzeichnet durch**
- einen ersten Gewindeflankenabschnitt (61a) mit einem ersten Gewindeflankeninnenwinkel (α1) und einen zweiten Gewindeflankenabschnitt (61b) mit einem zweiten Gewindeflankeninnenwinkel (α2), und
- ein Sperrprofil (SP), das von dem zweiten Gewindeflankenabschnitt (61b) abzweigt, sich zum Gewindegrund erstreckt und in einen Gewindegang des Halteeinrichtungs-Gewindes hineinragt,
- wobei der erste Gewindeflankeninnenwinkel (α1) kleiner ist als der zweite Gewindeflankeninnenwinkel (α2),
- wobei der erste Gewindeflankeninnenwinkel (α1) größer ist als 17,5°, und
- wobei der erste Gewindeflankeninnenwinkel (α1) und der zweite Gewindeflankeninnenwinkel (α2) relativ zu einer Bezugsgeraden gemessen werden, die sich ausgehend von einer Zentralachse des Halteeinrichtungs-Gewindes orthogonal zum zugehörigen Gewindezahn erstreckt.

13. Beschichtungsanlagenvorrichtung gemäß Anspruch 12, **dadurch gekennzeichnet, dass** das Halteeinrichtungs-Gewinde eine Steigung und einen Gewindezahn (61) mit einer Gewindezahntiefe (h2) aufweist und das Verhältnis Gewindezahntiefe (h2) zu Steigung
a) größer ist als ungefähr 0,3; und
b) kleiner ist als ungefähr 1,0.

14. Beschichtungsanlagenvorrichtung gemäß einem der Ansprüche 12-13, **dadurch gekennzeichnet, dass**
a) das Halteeinrichtungs-Gewinde zumindest einen Gewindezahn (61) aufweist; und
b) zumindest die Basis des Gewindezahns (61) im Wesentlichen in Form eines nicht gleichschenkligen Dreiecks ausgebildet ist; oder
c) zumindest die Basis des Gewindezahns (61) im Wesentlichen in Form eines nicht gleichschenkligen Trapezes ausgebildet ist.

15. Beschichtungsanlagenvorrichtung gemäß einem der Ansprüche 12-14, **dadurch gekennzeichnet, dass**
a) das Sperrprofil (SP) vorgesehen ist, um ein Befestigen inkompatibler Beschichtungsanlagenbauteile zu vermeiden und um in den reduzierten Gewindeflankenabschnitt (21c) des Beschichtungsanlagenbauteils hineinzuragen;
und
b) das Sperrprofil (SP) zwischen einer Schmutzaufnahme (SA) und dem zweitem Gewindeflankenabschnitt (61b) angeordnet ist; und/oderc)das Sperrprofil (SP)vom zweiten Gewindeflankenabschnitt (61b) abzweigt und sich zu der Schmutzaufnahme (SA) erstreckt.

16. Beschichtungsanlagenvorrichtung gemäß einem der Ansprüche 12-15, **dadurch gekennzeichnet, dass**
a) der erste Gewindeflankeninnenwinkel (α1) kleiner ist als ungefähr 32,5°;
b) der zweite Gewindeflankeninnenwinkel (α2) größer ist als ungefähr 27,5°; und
c) der zweite Gewindeflankeninnenwinkel (α2) kleiner ist als ungefähr 42,5°.

17. Beschichtungsanlagenvorrichtung gemäß einem der Ansprüche 12-16, **dadurch gekennzeichnet, dass** das Halteeinrichtungs-Gewinde
a) eine Steigung von größer als ungefähr 0,5mm; und
b) eine Steigung von kleiner als ungefähr4,0mm aufweist.

18. Beschichtungsanlagenvorrichtung gemäß einem der Ansprüche 12-17, **dadurch gekennzeichnet, dass** das Halteeinrichtungs-Gewinde einen Gewindezahn (61) mit einer Gewindezahntiefe (h2) umfasst, die
a) größer ist als ungefähr 0,2mm; und
b) kleiner ist als ungefähr 1,6mm.

19. Beschichtungsanlagenvorrichtung gemäß einem der Ansprüche 12-18, **dadurch gekennzeichnet, dass** das Halteeinrichtungs-Gewinde
a) ein Innengewinde ist und einen Gewindeaußenradius (r2) aufweist, der
b) größer ist als ungefähr 4,0mm; und
c) kleiner ist als ungefähr 22,5mm.

20. Beschichtungsanlagenvorrichtung gemäß einem der Ansprüche 12-19, **dadurch gekennzeichnet, dass**
a) das Halteeinrichtungs-Gewinde eingängig ist; oder
b) das Halteeinrichtungs-Gewinde mehrgängig ist.

21. Beschichtungsanlagenvorrichtung gemäß einem der Ansprüche 12-20, **dadurch gekennzeichnet, dass**
a) das Halteeinrichtungs-Gewinde (61) zumindest einen Gewindegrund umfasst; und
b) der Gewindegrund zumindest eine Schmutzaufnahme (SA) umfasst;
c) wobei der Gewindegrund oder die Schmutzaufnahme (SA) und die Gewindezahnspitze abgerundet ausgebildet ist und einen Rundungsradius umfasst, der
c1) größer ist als ungefähr 0,075mm; und
c2) kleiner ist als 0,3mm.

22. Verwendung
a) eines Gewindes mit den Merkmalen gemäß kennzeichnendem Teil einer der Ansprüche 1-11 an einem Beschichtungsanlagenbauteil, nämlich Ventil, Absprühkörper oder Glockenteller; oder
b) eines Gewindes mit den Merkmalen gemäß kennzeichnendem Teil einer der Ansprüche 12-21 an einer Beschichtungsanlagenvorrichtung, nämlich Zerstäuber, Farbwechselanordnung oder Sprühkörperwelle,
c) wobei das Beschichtungsanlagenbauteil oder die Beschichtungsanlagenvorrichtung vorgesehen ist zur Beschichtung von zumindest einem von Folgenden:
c1) Automobilkarosserien;
c2) Anbauteilen von Automobilkarosserien;
c3) Schiffen oder Schiffsteilen;
c4) Bauteilen von Flugzeugen;
c5) Bauteilen von Zügen.

23. Anordnung, umfassend ein Beschichtungsanlagenbauteil und eine Beschichtungsanlagenvorrichtung gemäß einem der Ansprüche 12-21 oder ein Beschichtungsanlagenbauteil gemäß einem der Ansprüche 1-11 und eine Beschichtungsanlagenvorrichtung.

24. Anordnung gemäß Anspruch 23, wobei zwischen Gewindezahn des einen Gewindes und Gewindegrund des anderen Gewindes eine Schmutzaufnahme definiert ist, wenn die Gewinde aneinandergeschraubt sind.

## Claims

1. A coating system component, namely a valve, spray body or bell cup, having at least one holding part for the releasable connection with a coating system device, wherein the holding part is a thread (20) having a special configuration, **characterized by**
- a first thread flank portion (21a) having a first thread flank internal angle (α1) and a second thread flank portion (21b) having a second thread flank internal angle (α2), and
- a reduced thread flank portion (21c), wherein the reduced thread flank portion (21c) branches off from the second thread flank portion (21b), extends to the thread tooth crest and creates space for a locking profile (SP) on the coating system device,
- wherein the first thread flank internal angle (α1) is less than the second thread flank internal angle (α2)
- wherein the first thread flank internal angle (α1) is greater than 17,5°, and
- wherein the first thread flank internal angle (α1) and the second thread flank internal angle (α2) are measured in relation to a reference straight line which extends from a central axis of the holding part thread orthogonally to the associated thread tooth.

2. The coating system component in accordance with claim 1, **characterized in that** the holding part thread comprises a pitch and a thread tooth (21) having a thread tooth depth (h1) and the ratio of the thread tooth depth (h1) to the pitch
a) is greater than around 0.3; and
b) is less than around 1.0.

3. The coating system component according to any one of claims 1-2, **characterized in that**
a) the holding part thread comprises at least one thread tooth (21); and
b) at least the base of the thread tooth (21) is substantially in the form of a non-isosceles triangle; or
c) at least the base of the thread tooth (21) is substantially in the form of a non-isosceles trapezium.

4. The coating system component according to any one of claims 1-3, **characterized in that**
a) the reduced thread flank portion (21c) is laterally reduced and bevelled and positioned between the thread tooth crest and the second thread flank portion (21b);
and/or
b) the reduced thread flank portion (21c) comprises a third thread flank internal angle (α3) and the third thread flank internal angle (α3) is greater than 47,5°.

5. The coating system component according to any one of claims 1-4, **characterized in that**
a) the first thread flank internal angle (α1) is less than around 32.5°;
b) the second thread flank internal angle (α2) is greater than around 27.5°; and
c) the second thread flank internal angle (α2) is less than around 42.5°.

6. The coating system component according to any one of claims 1-5, **characterized in that**
a) the first thread flank portion (21a) forms a bearing surface for contacting a thread of the coating system device during fastening and the second thread flank portion (21b) forms a bearing surface for contacting a thread of the coating system device during releasing, wherein the ratio of the fastening surface to the releasing surface; or
b) the ratio of the surface formed by the first thread flank portion (21a) to the surface formed by the second thread flank portion (21b)
c) is greater than around 0.5; and
d) is less than around 6,0.

7. The coating system component according to any one of claims 1-6, **characterized in that** the holding part thread
a) has a pitch of greater than around 0.5mm; and
b) has a pitch of less than around 4.0mm.

8. The coating system component according to any one of claims 1-7, **characterized in that** the holding part thread has a thread tooth (21) having a thread tooth depth (h1) which
a) is greater than around 0.2mm; and
b) is less than around 1.6mm.

9. The coating system component according to any one of claims 1-8, **characterized in that** the holding part thread
a) is an external thread and has a thread external radius (r1) which
b) is greater than around 4.0mm; and
c) is less than around 22.5mm.

10. The coating system component according to any one of claims 1-9, **characterized in that**
a) the holding part thread is single-flight; or
b) the holding part thread is multi-flight.

11. The coating system component according to any one of claims 1-10, **characterized in that**
a) the holding part thread comprises at least one rounded thread root; and
b) the thread tooth (21) has a rounded thread tooth crest.

12. A coating system device, namely an atomizer, a color changer arrangement or a spray shaft, having at least one holding means for the releasable connection with a coating system component according to any one of claims 1-11, wherein the holding means is a thread, **characterized by**
- a first thread flank portion (61a) having a first thread flank internal angle (α1) and a second thread flank portion (61b) having a second thread flank internal angle (α2), and
- a locking profile (SP) that branches off from the second thread flank portion (61b), extends to the thread root and projects into a thread flight of the holding means thread,
- wherein the first thread flank internal angle (α1) is less than the second thread flank internal angle (α2),
- wherein the first thread flank internal angle (α1) is greater than 17,5°, and
- wherein the first thread flank internal angle (α1) and the second thread flank internal angle (α2) are measured in relation to a reference straight line which extends from a central axis of the holding means thread orthogonally to the associated thread tooth.

13. The coating system device according to claim 12, **characterized in that** the holding means thread has a pitch and a thread tooth (61) having a thread tooth depth (h2) and the ratio of the thread tooth depth (h2) to the pitch
a) is greater than around 0.3;and
b) is less than around 1.0.

14. The coating system device according to any one of claims 12-13, **characterized in that**
a) the holding means thread has at least one thread tooth (61); and
b) at least the base of the thread tooth (61) is substantially in the form of a non-isosceles triangle; or
c) at least the base of the thread tooth (61) is substantially in the form of a non-isosceles trapezium.

15. The coating system device according to any one of claim 12-14, **characterized in that**
a) the locking profile (SP) is provided such as to avoid an attachment of incompatible coating system components and to project into the reduced thread flank portion (21c) of the coating system component; and
b) the locking profile (SP) is disposed between a dirt receiver (SA) and the second thread flank portion (61b); and/or
c) the locking profile (SP) branches off from the second thread flank portion (61b) and extends to the dirt receiver (SA).

16. The coating system device according to any one of claims 12-15, **characterized in that**
a) the first thread flank internal angle (α1) is less than around 32.5°;
b) the second thread flank internal angle (α2) is greater than around 27.5°; and
c) the second thread flank internal angle (α2) is less than around 42.5°.

17. The coating system device according to any one of claims 12-16, **characterized in that** the holding means thread
a) has a pitch of greater than around 0.5mm; and
b) has a pitch of less than around 4.0mm.

18. The coating system device according to any one of claims 12-17, **characterized in that** the holding means thread has a thread tooth (61) having a thread tooth depth (h2) which
a) is greater than around 0.2mm; and
b) is less than around 1.6mm.

19. The coating system device according to any one of claims 12-18, **characterized in that** the holding means thread
a) is an internal thread and has a thread external radius (r2) which
b) is greater than around 4.0mm; and
c) is less than around 22.5mm.

20. The coating system device according to any one of claims 12-19, **characterized in that**
a) the holding means thread is single-flight; or
b) the holding means thread is multi-flight.

21. The coating system device according to any one of claims 12-20, **characterized in that**
a) the holding means thread (61) comprises at least one thread root; and
b) the thread root comprises at least one dirt receiver (SA) ;
c) wherein the thread root or the dirt receiver (SA) and the thread tooth crest is rounded and comprises a rounding radius which
c1) is greater than around 0.075mm; and
c2) is less than 0.3mm.

22. Use
a) of a thread comprising the features in accordance with the characterizing portion of any one of the claims 1-11 on a coating system component, namely a valve, spray body or bell cup; or
b) of a thread comprising the features in accordance with the characterizing portion of any one of the claims 12-21 on a coating system device, namely an atomizer, a color changer arrangement or a spray body shaft,
c) wherein the coating system component or the coating system device is provided for the purpose of coating at least one of the following:
c1) motor vehicle bodies;
c2) attachment parts of motor vehicle bodies;
c3) ships or ship parts;
c4) components of aircrafts;
c5) components of trains.

23. An arrangement comprising a coating system component and a coating system device in accordance with any one of the claims 12-21, or a coating system component in accordance with any one of the claims 1-11 and a coating system device.

24. The arrangement in accordance with claim 23, wherein between the thread tooth of one thread and the thread root of the other thread a dirt receiver is defined when the threads are screwed together.

## Revendications

1. Composant d'installation de revêtement, à savoir une soupape, un corps de pulvérisation ou un plateau à cloche, avec au moins une partie de maintien pour une liaison amovible avec un dispositif d'installation de revêtement, la partie de maintien étant un filetage (20) avec une configuration particulière, **caractérisé par** :
- une première portion de flanc de filetage (21 a) avec un premier angle interne de flanc de filetage (α1) et une deuxième portion de flanc de filetage (21 b) avec un deuxième angle interne de flanc de filetage (α2), et
- une portion de flanc de filetage réduite (21c), la portion de flanc de filetage réduite (21c) bifurquant à partir de la deuxième portion de flanc de filetage (21 b), s'étendant vers la pointe des dents du filetage et créant un espace pour un profilé de blocage (SP) sur le dispositif d'installation de revêtement,
- le premier angle interne de flanc de filetage (α1) étant inférieur au deuxième angle interne de flanc de filetage (α2),
- le premier angle interne de flanc de filetage (α1) étant supérieur à 17,5° et
- le premier angle interne de flanc de filetage (α1) et le deuxième angle interne de flanc de filetage (α2) étant mesurés par rapport à une droite de référence qui s'étend à partir d'un axe central du filetage de la partie de maintien, perpendiculairement à la dent de filetage correspondante.

2. Composant d'installation de revêtement selon la revendication 1, **caractérisé en ce que** le filetage de la partie de maintien présente un pas et une dent de filetage (21) avec une profondeur de dent de filetage (h1) et le rapport entre la profondeur de la dent de filetage (h1) et le pas est :
a) supérieur à environ 0,3 ; et
b) inférieur à environ 1,0.

3. Composant d'installation de revêtement selon l'une des revendications 1 à 2, **caractérisé en ce que** :
a) le filetage de la partie de maintien comprend au moins une dent de filetage (21) ; et
b) au moins la base de la dent de filetage (21) présente essentiellement la forme d'un triangle non isocèle ; et
c) au moins la base de la dent de filetage (21) présente essentiellement la forme d'un trapèze non isocèle.

4. Composant d'installation de revêtement selon l'une des revendications 1 à 3, **caractérisé en ce que** :
a) la portion de flanc de filetage réduite (21c) est réduite latéralement et est positionnée en biais entre la pointe de la dent de filetage et la deuxième portion de flanc de filetage (21b) ;
et/ou
b) la portion de flanc de filetage réduite (21c) présente un troisième angle interne de flanc de filetage (α3) et le troisième angle interne de flanc de filetage (α3) est supérieur à environ 47,5°.

5. Composant d'installation de revêtement selon l'une des revendications 1 à 4, **caractérisé en ce que** :
a) le premier angle interne de flanc de filetage (α1) est inférieur à environ 32,5° ;
b) le deuxième angle interne de flanc de filetage (α2) est supérieur à environ 27,5° ;
et
c) le deuxième angle interne de flanc de filetage (α2) est inférieur à environ 42,5°.

6. Composant d'installation de revêtement selon l'une des revendications 1 à 5, **caractérisé en ce que** :
a) la première portion de flanc de filetage (21 a) constitue une surface d'appui pour un contact d'un filetage du dispositif de l'installation de revêtement lors du serrage et la deuxième portion de flanc de filetage (21b) constitue une surface d'appui pour un contact d'un filetage du dispositif de l'installation de revêtement lors du desserrage, le rapport entre la surface de serrage et la surface de desserrage ; ou
b) le rapport entre la surface constituée de la première portion de flanc de filetage (21 a), et la surface constituée de la deuxième portion de flanc de filetage (21 b),
c) est supérieure à environ 0,5 ; et
d) inférieure à environ 6,0.

7. Composant d'installation de revêtement selon l'une des revendications 1 à 6, **caractérisé en ce que** le filetage de la partie de maintien :
a) présente un pas supérieur à environ 0,5 mm ; et
b) un pas inférieur à environ 4,0 mm.

8. Composant d'installation de revêtement selon l'une des revendications 1 à 7, **caractérisé en ce que** le filetage de la partie de maintien comprend une dent de filetage (21) avec une profondeur de dent de filetage (h1) qui :
a) est supérieure à environ 0,2 mm ; et
b) est inférieure à environ 1,6 mm.

9. Composant d'installation de revêtement selon l'une des revendications 1 à 8, **caractérisé en ce que** le filetage de la partie de maintien :
a) est un filetage externe et présente un rayon externe de filetage (r1) qui
b) est supérieur à environ 4,0 mm ;
c) et inférieur à environ 22,5 mm.

10. Composant d'installation de revêtement selon l'une des revendications 1 à 9, **caractérisé en ce que** :
a) le filetage de la partie de maintien est à filet simple ; ou
b) le filetage de la partie de maintien est à filet multiple.

11. Composant d'installation de revêtement selon l'une des revendications 1 à 10, **caractérisé en ce que** :
a) le filetage de la partie de maintien comprend au moins un fond de filetage arrondi ; et
b) la dent de filetage (21) comprend une pointe de dent de filetage arrondie.

12. Dispositif d'installation de revêtement, à savoir pulvérisateur, dispositif de changement de couleur ou arbre de corps de pulvérisation, avec au moins un dispositif de maintien pour la liaison amovible avec un composant d'installation de revêtement selon l'une des revendications 1 à 11, le dispositif de maintien étant un filetage, **caractérisé par** :
- une première portion de flanc de filetage (61 a) avec un premier angle interne de flanc de filetage (α1) et une deuxième portion de flanc de filetage (61 b) avec un deuxième angle interne de flanc de filetage (α2), et
- un profilé de blocage (SP) qui bifurque de la deuxième portion de flanc de filetage (61 b), s'étend jusqu'au fond du filetage et dépasse dans un filet du filetage du dispositif de maintien,
- le premier angle interne de flanc de filetage (α1) étant inférieur au deuxième angle interne de flanc de filetage (α2),
- le premier angle interne de flanc de filetage (α1) étant supérieur à 17,5°, et
- le premier angle interne de flanc de filetage (α1) et le deuxième angle interne de flanc de filetage (α2) étant mesurés par rapport à une droite de référence qui s'étend, à partir d'un axe central du filetage du dispositif de maintien, perpendiculairement à la dent de filetage correspondante.

13. Dispositif d'installation de revêtement selon la revendication 12, **caractérisé en ce que** le filetage du dispositif de maintien présente un pas et une dent de filetage (61) avec une profondeur de dent de filetage (h2) et le rapport entre la profondeur de dent de filetage (h2) et le pas :
a) est supérieur à environ 0,3 ; et
b) inférieur à environ 1,0.

14. Dispositif d'installation de revêtement selon l'une des revendications 12 à 13, **caractérisé en ce que** :
a) le filetage du dispositif de maintien comprend au moins une dent de filetage (61) ; et
b) au moins la base de la dent de filetage (61) présente essentiellement la forme d'un triangle non isocèle ; ou
c) au moins la base de la dent de filetage (61) présente essentiellement la forme d'un trapèze non isocèle.

15. Dispositif d'installation de revêtement selon l'une des revendications 12 à 14, **caractérisé en ce que** :
a) le profilé de blocage (SP) est prévu pour empêcher une fixation de composants d'installation de revêtement incompatibles et pour dépasser dans la portion de flanc de filetage réduite (21c) du composant d'installation de revêtement ; et
b) le profilé de blocage (SP) est disposé entre un collecteur de poussière (SA) et la deuxième portion de flanc de filetage (61 b) ; et/ou
c) le profilé de blocage (SP) bifurque de la deuxième portion de flanc de filetage (61 b) et s'étend jusqu'au collecteur de poussière (SA).

16. Dispositif d'installation de revêtement selon l'une des revendications 12 à 15, **caractérisé en ce que** :
a) le premier angle interne de flanc de filetage (α1) est inférieur à environ 32,5° ;
b) le deuxième angle interne de flanc de filetage (α2) est supérieur à environ 27,5° ;
et
c) le deuxième angle interne de flanc de filetage (α2) est inférieur à environ 42,5°.

17. Dispositif d'installation de revêtement selon l'une des revendications 12 à 16, **caractérisé en ce que** le filetage du dispositif de maintien présente :
a) un pas supérieur à environ 0,5 mm ; et
b) un pas inférieur à environ 4,0 mm.

18. Dispositif d'installation de revêtement selon l'une des revendications 12 à 17, **caractérisé en ce que** le filetage du dispositif de maintien comprend une dent de filetage (61) avec une profondeur de dent de filetage (h2) qui est :
a) supérieure à environ 0,2 mm ; et
b) inférieure à environ 1,6 mm.

19. Dispositif d'installation de revêtement selon l'une des revendications 12 à 18, **caractérisé en ce que** le filetage du dispositif de maintien :
a) est un filetage interne et présente un rayon externe de filetage (r2) qui est
b) supérieur à environ 4,0 mm ; et
c) inférieur à environ 22,5 mm.

20. Dispositif d'installation de revêtement selon l'une des revendications 12 à 19, **caractérisé en ce que** :
a) le filetage du dispositif de maintien est à filet simple ; ou
b) le filetage du dispositif de maintien est à filet multiple.

21. Dispositif d'installation de revêtement selon l'une des revendications 12 à 20, **caractérisé en ce que** :
a) le filetage du dispositif de maintien (61) comprend au moins un fond de filetage ; et
b) le fond de filetage comprend au moins un collecteur de poussière (SA) ;
c) le fond de filetage ou le collecteur de poussière (SA) et la pointe de la dent de filetage sont arrondis et présentent un rayon d'arrondi qui est :
c1) supérieur à environ 0,075 mm ; et
c2) inférieur à 0,3 mm.

22. Utilisation
a) d'un filetage avec les caractéristiques décrites dans la partie caractérisante d'une des revendications 1 à 11 sur un composant d'installation de revêtement, à savoir une soupape, un corps de pulvérisation ou un plateau à cloche ; ou
b) d'un filetage avec les caractéristiques décrites dans la partie caractérisante d'une des revendications 12 à 21 sur un dispositif d'installation de revêtement, à savoir un pulvérisateur, un dispositif de changement de couleur ou un arbre de corps de pulvérisation,
c) le composant d'installation de revêtement ou le dispositif d'installation de revêtement étant prévu pour le revêtement d'au moins un élément parmi les suivants :
c1) des carrosseries d'automobiles ;
c2) des composants de carrosseries d'automobiles ;
c3) des navires ou des parties de navires ;
c4) des composants d'avions ;
c5) des composants de trains.

23. Dispositif comprenant un composant d'installation de revêtement et un dispositif d'installation de revêtement selon l'une des revendications 12 à 21 ou un composant d'installation de revêtement selon l'une des revendications 1 à 11 et un dispositif d'installation de revêtement.

24. Dispositif selon la revendication 23, un collecteur de poussière étant défini entre la dent de filetage et le fond de filetage de l'autre filetage lorsque les filetages sont vissés entre eux.
